# EUROPÄISCHE PATENTSCHRIFT

(11) **EP 3 559 742 B1**
(45) Veröffentlichungstag und Bekanntmachung des Hinweises auf die Patenterteilung: **15.06.2022**
(21) Anmeldenummer: 17835924.6
(22) Anmeldetag: 20.12.2017
(51) Int. Cl.: G03B 43/00

(54) **PRÜFUNG UND/ODER JUSTIERUNG EINER KAMERA, INSBESONDERE EINER DIGITALEN KAMERA, MITTELS EINES OPTISCHEN PRÜFNORMALS**
TESTING AND/OR CALIBRATING OF A CAMERA, IN PARTICULAR A DIGITAL CAMERA, BY MEANS OF AN OPTICAL TEST STANDARD
VÉRIFICATION ET/OU AJUSTAGE D'UNE CAMÉRA, EN PARTICULIER D'UNE CAMÉRA NUMÉRIQUE, AU MOYEN D'UN ÉTALON DE TEST OPTIQUE

(30) Priorität: 23.12.2016 DE 102016125642
(43) Veröffentlichungstag der Anmeldung: 30.10.2019
(73) Patentinhaber: WIPOTEC GmbH, 67657 Kaiserslautern (DE)
(72) Erfinder: SCHULZ, Stefan, 67661 Kaiserslautern (DE); ELSPASS, René, 67722 Winnweiler (DE)
(74) Vertreter: Eder Schieschke & Partner mbB
(86) Internationale Anmeldenummer: PCT/DE2017/101089
(87) Internationale Veröffentlichungsnummer: WO 2018/113846

(56) Entgegenhaltungen:
- WO-A1-2016/049259
- CN-A- 105 389 808
- DE-U1-202004 021 915
- US-A- 5 600 574
- US-A1- 2011 143 811

## Beschreibung

Die Erfindung betrifft ein Verfahren zum Prüfen und/oder Justieren einer Kamera, insbesondere einer digitalen Kamera, unter Verwendung eines optischen Prüfnormals. Weiterhin betrifft die Erfindung eine optische Inspektionsvorrichtung, die eine Kamera aufweist, wobei die Inspektionsvorrichtung so ausgestaltet ist, dass das erfindungsgemäße Verfahren zum Prüfen und/oder Justieren der Kamera selbsttätig oder mit Eingriffen einer Bedienperson durchführbar ist. Schließlich betrifft die Erfindung ein Verfahren zur Herstellung eines geeigneten optischen Prüfnormals.

In der produzierenden Industrie, in der Kommissionierung und im Handel werden Kameras für die Inspektion von Produkten und deren Verpackung verwendet. Beispielsweise werden optische Labels, die auf eine Verpackung aufgebracht, beispielsweise aufgedruckt, oder in Form eines separaten Trägers aufgeklebt sein können, unter Verwendung von Kameras gelesen und/oder kontrolliert. Die auf den Labels aufgebrachten Informationen können als Klartext oder auch in Form von grafischen Codes vorliegen, beispielsweise in Form von eindimensionalen optischen Codes (z.B. Strichcodes) oder zweidimensionalen optischen Codes (beispielsweise Matrixcodes).

Unabhängig von der Art der die betreffenden Informationen beinhaltenden optischen Strukturen eines solchen Labels müssen die optischen Strukturen mit ausreichender Qualität, insbesondere ausreichender Kantenschärfe und ausreichendem Kontrast der grafischen Strukturen, vorliegen bzw. hergestellt werden. In den meisten Fällen muss eine ausreichende optische Bildqualität (beispielsweise eine ausreichende Qualität des Drucks) der Label sichergestellt werden. Nur dann kann im weiteren Verlauf des Produktionsprozesses oder im Vertriebsweg der betreffenden Gegenstände (Produkt oder Verpackung) bis hin zum Endkunden sichergestellt werden, dass diese Informationen unter Verwendung von geeigneten Inspektionsvorrichtungen korrekt gelesen bzw. erfasst werden können.

Es ist daher entscheidend, dass die Qualität derartiger Kennzeichnungen bereits beim Aufbringen auf die Produkte bzw. Verpackungen eine ausreichende Qualität aufweisen. Um dies zu überprüfen, finden in der Praxis meist optische Inspektionsvorrichtungen zum Erkennen bzw. Lesen derartiger Strukturen, insbesondere optischer Codes, Verwendung, die eine Kamera beinhalten. Die zu prüfende optische Struktur wird mittels der Kamera erfasst und in ein digitales Bild umgewandelt. Dabei kann selbstverständlich eine analoge Kamera verwendet werden, deren analoges Ausgangssignal digitalisiert wird. Vorzugsweise wird man hierfür jedoch eine digitale Kamera verwenden, die bereits ein digitales Bildsignal liefert. Das so erzeugte digitale Bild kann dann daraufhin untersucht werden, ob die optische Struktur eine ausreichende Darstellungsqualität aufweist. Dies erfolgt üblicherweise mittels einer geeigneten Software zur Auswertung des digitalen Bildes.

Hierzu ist es selbstverständlich erforderlich, dass die optische Inspektionsvorrichtung, insbesondere die von dieser umfasste Kamera, die optische Struktur mit ausreichender Qualität erfasst. Es ist daher erforderlich, derartige optische Inspektionsvorrichtungen zu kalibrieren bzw. zu justieren, um das Lesen bzw. Erkennen der optischen Strukturen mit ausreichender Qualität bzw. Sicherheit zu gewährleisten.

Dabei sei an dieser Stelle darauf hingewiesen, dass unter dem Begriff "kalibrieren" im engeren Sinn ein Messprozess zur zuverlässig reproduzierbaren Feststellung und Dokumentation der Abweichung eines Messgeräts oder einer Maßverkörperung gegenüber einem anderen Gerät oder einer anderen Maßverkörperung verstanden wird, die in diesem Fall als Normal bezeichnet wird. Im weiteren Sinn wird unter dem Begriff "kalibrieren" auch ein weiterer Schritt verstanden, nämlich die Berücksichtigung der ermittelten Abweichung bei der anschließenden Benutzung des Messgeräts zur Korrektur der abgelesenen Werte. Anstelle einer derartigen Berücksichtigung einer Abweichung zur Korrektur des Messergebnisses kann das Messgerät auch durch das Einstellen wenigstens eines Parameters so justiert werden, dass das Messergebnis eine für die betreffende Anwendung ausreichende Genauigkeit aufweist (Justierung des Messgeräts). Unter dem Begriff "Justierung" im engeren Sinne wird im Folgenden das Justieren eines Parameters des Messgeräts ohne eine Korrektur des Messwertes bei Verwendung des im Justierprozess ermittelten Wertes für den betreffenden Parameter verstanden. Im weiteren Sinne wird der Begriff "Justierung" im Folgenden auch für eine Korrektur des Messwertes nach dem Abschluss des eigentlichen Messvorgangs verstanden, d. h. der Messwert wird durch Anwenden einer Korrekturoperation (insbesondere einer Rechenoperation) verändert. Die Korrekturoperation kann beispielsweise in einer vorzeichenrichtigen Addition eines Korrekturwertes zum (eigentlichen) Messwert und/oder einer Multiplikation des (eigentlichen) Messwertes mit einem Korrekturfaktor oder einer Kombination hieraus bestehen. Es sind jedoch selbstverständlich ebenfalls komplexere Korrekturoperationen möglich. Beispielsweise kann eine Bildkorrektur eines digitalen Bildes durch Anwenden eines Punktoperators erfolgen, mit dem ein neuer Farb- oder Grauwert eines Pixels allein in Abhängigkeit von seinem eigenen bisherigen Farb- oder Grauwert und seiner eigenen bisherigen Position im Bild berechnet wird, ohne dass dabei die Nachbarschaft und/oder der Kontext des Pixels berücksichtig werden. Soweit im Folgenden nicht ausdrücklich darauf hingewiesen wird, soll unter dem Begriff "Justierung" dessen Bedeutung im weiteren Sinne verstanden werden.

Im Fall der vorstehend erwähnten optischen Prüfgeräte für optische Codes ist es bekannt, käuflich zu erwerbende optische Referenz-Prüfnormale zu verwenden, die mehrere Code-Darstellungen aufweisen bzw. zeigen, wobei jede der Code-Darstellungen einer bestimmten vordefinierten Qualitätsstufe entspricht. Die Code-Darstellungsqualität ist z.B. in der Norm ISO/IEC 15416 für Strichcodes und in der Norm ISO/IEC 15415 für Matrixcodes festgelegt. Dabei sind in diesen Normen auch Qualitätsstufen durch sogenanntes "grading" festgelegt. Für mehrere Parameter der Code-Darstellungen, wie die minimale Reflektivität, der Symbolkontrast etc., werden dabei jeweils Bereiche für die Parameterwerte festgelegt. Jedem Bereich ist eine Qualitätsstufe für den betreffenden Parameter zugeordnet. Aus den Qualitätsstufen der einzelnen Parameter wird dann eine Gesamtqualitätsstufe ermittelt. Beispielsweise kann, wie in der ISO/IEC 15415, die niedrigste Qualitätsstufe aller Qualitätsstufen für die einzelnen Parameter als Gesamt-Qualitätsstufe definiert werden.

Problematisch ist bisher die Prüfung bzw. Kalibrierung der Kameras bzw. der gesamten, die Kamera umfassenden Inspektionsvorrichtung in der Serienfertigung, da hier immer eine entsprechende Anzahl von teuren und empfindlichen Referenz-Prüfnormalen vorhanden sein muss, die jeweils nach Ablauf der Gültigkeitsdauer von z.B. zwei Jahren ausgetauscht werden müssen.

Eine Justierung im Feld, d. h. am Einsatzort des Prüfgeräts, ist bei solchen Prüfgeräten bzw. Kameras bisher entweder mit großem Aufwand verbunden oder sogar unmöglich.

Der Erfindung liegt daher die Aufgabe zugrunde, ein Verfahren zum Prüfen und/oder Justieren einer Kamera, insbesondere einer digitalen Kamera, unter Verwendung eines optischen Prüfnormals, welches auf einfache und kostengünstige Weise sowohl herstellerseitig (im Werk des Herstellers der Kamera oder auch im Feld durch den Hersteller) als auch anwenderseitig (durch den Anwender der Kamera, insbesondere am Einsatzort) durchführbar ist. Weiterhin liegt der Erfindung die Aufgabe zugrunde, eine optische Inspektionsvorrichtung zu schaffen, die eine Kamera aufweist, wobei die Inspektionsvorrichtung so ausgestaltet ist, dass das erfindungsgemäße Verfahren zum Prüfen und/oder Justieren der Kamera durchführbar ist. Schließlich liegt der Erfindung die Aufgabe zugrunde, ein Verfahren zur Herstellung eines optischen Prüfnormals zur Durchführung des Verfahrens zu schaffen.

Die Erfindung löst diese Aufgaben mit den Merkmalen der Patentansprüche 1 bzw. 11 und 15.

Die Erfindung geht von der Erkenntnis aus, zur Prüfung und/oder Justierung einer Kamera, insbesondere einer digitalen Kamera, keine absoluten Werte eines Prüfnormals zu verwenden, sondern vielmehr mittelbare Werte, die dem Prüfnormal von einer Referenzkamera zugeordnet werden. Ziel der Prüfung ist damit nicht das Erreichen von absoluten Werten bestimmter Parameter (ggf. mit vorgegebenen zulässigen Abweichungen), die durch das Prüfnormal unmittelbar vorgegeben sind, beispielsweise eines bestimmten Mindestwertes für den Kontrast etc., sondern das Erreichen von Referenzwerten, die dem Prüfnormal mittels einer Referenzkamera zugeordnet werden. Mit anderen Worten, Ziel der Prüfung und/oder Justierung ist es, bestimmte Parameter oder Eigenschaften einer Referenzkamera, die mit dem Prüfnormal bestimmt wurden, mit der zu prüfenden und/oder justierenden Kamera möglichst gut anzunähern.

Nach dem erfindungsgemäßen Verfahren zum Prüfen und/oder Justieren einer Kamera wird zunächst ein optisches Prüfnormal erstellt. Hierzu wird ein Träger derart hergestellt, dass auf einer Oberfläche des Trägers oder in den Träger zumindest teilweise eingebettet mehrere, bevorzugt wenigstens drei Teilflächen mit jeweils unterschiedlichen Graudarstellungen vorgesehen sind. Selbstverständlich kann ein derartiger Träger auch als fertiges Zulieferteil bezogen und für die weiteren Schritte verwendet werden. Mittels einer Referenz-Kamera wird wenigstens ein Referenzbild der Oberfläche des Trägers oder des zumindest im Bereich der Teilflächen durchstrahlten Trägers aufgenommen. Die Kamera weist hierzu eine vorgegebene, wenigstens einen Parameter umfassende Einstellung auf. Aus dem wenigstens einen Referenzbild werden dann Referenz-Grauwerte für die einzelnen Teilflächen auf der Oberfläche des Trägers oder für die in den Träger zumindest teilweise eingebetteten Teilflächen ermittelt und dem optischen Träger zugeordnet.

Unter dem Begriff "Graudarstellung" wird im Rahmen der vorliegenden Beschreibung folgende Eigenschaft einer Fläche einer vorgegebenen Größe verstanden: Die Fläche weist eine im Wesentlichen homogene (örtliche) Grauwertverteilung auf, so dass die Abweichungen der (mittleren) Grauwerte von Teilflächen einer bestimmten Größe (beispielsweise einem Hundertstel oder einem Zehntausendstel der gesamten Fläche) von einem mittleren Grauwert über die gesamte Fläche relativ gering sind (beispielsweise kleiner als 5% bzw. 2% bzw. 1%). Größere Abweichungen für sehr kleine Teilflächen, die durch sehr kleine Verschmutzungen oder Druckfehler entstehen können, sind in gewissem Rahmen akzeptabel.

Ein auf diese Weise hergestelltes optisches Prüfnormal kann dann zum Treffen einer Aussage über eine genügende oder ungenügende Justierung verwendet werden. Hierzu wird wenigstens ein Bild des optischen Prüfnormals mit der zu prüfenden und/oder justierenden Kamera aufgenommen, wobei das Aufnehmen des wenigstens einen Bildes mit einer vorgegebenen, wenigstens einen Parameter umfassenden Einstellung der zu prüfenden und/oder justierenden Kamera erfolgt. Aus dem wenigstens einen Bild werden Ist-Grauwerte für die Teilflächen auf der Trägeroberfläche oder Ist-Grauwerte für die mit einer Strahlung durchstrahlten Teilflächen ermittelt. Bei einem Durchstrahlen weist die auf das Prüfnormal auftreffende Strahlung eine vorbestimmte Intensität und/oder ein vorbestimmtes Spektrum auf. Die erfassten Grauwerte können abhängig sein vom Spektrum der Strahlung, die durch das Prüfnormal bzw. die Teilflächen hindurchgetreten ist und/oder von der Intensität dieses Strahlungsanteils. Die Abweichung der Ist-Grauwerte von den Referenz-Grauwerten kann dann dazu verwendet werden, um eine Aussage darüber zu treffen, ob die Justierung der zu prüfenden und/oder justierenden Kamera einer vorgegebenen Anforderung genügt.

Das Verfahren ermöglicht somit im einfachsten Fall das Prüfen einer Kamera mittels des Prüfnormals, welches unter Verwendung einer (möglichst optimal justierten) Referenzkamera erstellt wurde. Das Prüfnormal besteht aus dem Träger mit den mehreren Teilflächen mit jeweils unterschiedlichen Graudarstellungen und aus den diesem Prüfnormal zugeordneten Referenz-Grauwerten, wobei die Referenz-Grauwerte unmittelbar dem Prüfnormal zugeordnet sind (z.B. optisch lesbar aufgebracht oder auf einem damit unmittelbar verbundenen Speichermedium gespeichert). Entspricht die Kamera den vorgegebenen Prüfkriterien, z.B. einem der vorgenannten Kriterien für eine zulässige maximale Abweichung der Ist-Grauwerte von den Referenz-Grauwerten, so kann die Kamera als in Ordnung befunden und andernfalls als fehlerhaft befunden werden. Im letzteren Fall kann die betreffende Kamera z.B. aussortiert oder, wie nachstehend erläutert, einer Justierung unterzogen werden.

Zur Durchführung dieses Prüfverfahrens wird man als Referenz-Kamera vorzugsweise eine im Wesentlichen mit der zu prüfenden und/oder justierenden Kamera baugleiche Kamera verwenden. Dies ist jedoch nicht zwingend erforderlich, solange die Referenz-Kamera weitestgehend ähnliche Eigenschaften aufweist wie die zu prüfende und/oder justierende Kamera, insbesondere was das Erfassen von Grauwerten anbelangt.

Die Referenzkamera und/oder die zu prüfende und/oder zu justierende Kamera können nicht nur als graustufenfähige Kamera ausgebildet sein, sondern auch als Farbkameras, beispielsweise als RGB-Farbkameras. Der Grauwert wird dann aus den Komponenten des Farb-Bildsignals ermittelt.

Der Träger des Prüfnormals kann vorzugsweise als platten- oder kartenförmiger Träger ausgebildet sein, wie dies auch bei einer Vielzahl von derzeit auf dem Markt erhältlichen Referenz-Prüfnormalen der Fall ist.

Die zu prüfende und/oder justierende Kamera kann fehlerhaft erkannt werden, wenn die Ist-Grauwerte um mehr als einen vorgegebenen Betrag von den Referenz-Grauwerten abweichen oder außerhalb eines vorgegebenen Wertebereichs liegen. Beispielsweise kann als Maß für eine ausreichende Justierung der Betrag der maximalen Abweichung der Ist-Grauwerte von den Referenz-Grauwerten für die einzelnen Teilflächen verwendet werden oder die Summe der Beträge oder der Mittelwert der Summe der Beträge.

Nach einer Ausführungsform der Erfindung kann der wenigstens eine Parameter der Einstellung der zu prüfenden und/oder justierenden Kamera, beispielsweise die Belichtungszeit und/oder die Empfindlichkeit, zum Zweck der Justierung der Kamera so variiert werden, dass bei Aufnehmen wenigstens eines weiteren Bildes des optischen Prüfnormals die aus dem wenigstens einen weiteren Bild ermittelten Ist-Grauwerte für die Teilflächen möglichst nahe an den Referenz-Grauwerten liegen. Es wird also ein Justierverfahren mit dem Ziel durchgeführt, eine Kameraeinstellung zu ermitteln (d. h. einen Wert für den wenigstens einen Parameter, der von der Kameraeinstellung umfasst wird), bei der die Ist-Grauwerte für die Teilflächen des Prüfnormals, die aus einem mit dieser Kameraeinstellung aufgenommenen Bild ermittelt werden, möglichst wenig von den Referenz-Grauwerten abweichen oder sogar mit diesen identisch sind (Justierung im engeren Sinne).

An dieser Stelle sei darauf hingewiesen, dass eine Vielzahl unterschiedlicher Möglichkeiten zur Bewertung der Abweichung der Ist-Grauwerte von den Referenz-Grauwerten existiert. Beispielsweise kann für jede der mehreren Teilflächen die Differenz zwischen dem betreffenden Ist-Grauwert und dem betreffenden Referenz-Grauwert bestimmt werden. Als Abweichung kann dann beispielsweise der maximale Betrag der Differenzen, die Summe oder der der arithmetische Mittelwert der Beträge der Differenzen oder auch die Summe der Betragsquadrate der Differenzen oder der geometrische Mittelwert der Differenzen definiert werden.

Durch das mehrere Teilflächen mit jeweils unterschiedlichen Graudarstellungen aufweisende Prüfnormal können somit alle Parameter bzw. zumindest alle wesentlichen Parameter der Kameraeinstellung geprüft bzw. justiert werden, die einen Einfluss auf das Erfassen von Grauwerten haben, also insbesondere die Belichtungszeit und die Empfindlichkeit der Kamera bzw. des Bildsensors (einschließlich der elektrischen Verstärkung des elektrischen Bildsignals), oder auch die Helligkeit einer von der Kamera umfassten Beleuchtungsvorrichtung, z.B. einer LED-Beleuchtungsvorrichtung, zur Beleuchtung der aufzunehmenden Objekte. Bei einer Ausführungsform, bei der das Prüfnormal durchstrahlt wird, kann selbstverständlich eine geeignete Strahlungsquelle vorgesehen sein, die zur Erzeugung einer geeigneten elektromagnetischen Strahlung (beispielsweise Röntgenstrahlung oder Terahertz-Strahlung) ausgebildet ist.

Zur Justierung einer Kamera können dabei selbstverständlich ein oder mehrere Schritte ausgeführt werden, z.B. im Sinne eines iterativen Verfahrens mit jeweils unterschiedlichen Einstellungen der betreffenden Kamera. Der Betrag und/oder die Richtung der Änderung des wenigstens einen Parameters der Einstellung können dabei abhängig von den Beträgen und/oder den Richtungen der im vorhergehenden Schritt festgestellten Abweichungen der Ist-Grauwerte von den Referenz-Grauwerten variiert werden. Es ist jedoch ebenfalls möglich, mehrere Schritte mit jeweils unterschiedlichen Einstellungen (z.B. verschiedenen, gleichmäßig beabstandeten Werten für jeweils einen Parameter) durchzuführen und anhand der Ergebnisse für die jeweils festgestellten Abweichungen diejenige Einstellung zu verwenden, für welche die geringste Abweichung ermittelt wurde. Selbstverständlich ist es auch möglich, für den wenigstens einen Parameter ein Interpolationsverfahren zur Ermittlung der Einstellung mit der geringsten Abweichung anzuwenden.

Nach einer Ausführungsform des Verfahrens kann die zu prüfende und/oder justierende Kamera als ausreichend justiert erkannt werden (Justierung im weiteren Sinne), wenn eine Abweichung der Ist-Grauwerte von den Referenz-Grauwerten in einem vorgegebenen zulässigen Bereich liegt, und/oder als fehlerhaft justiert erkannt werden, wenn die Abweichung der Ist-Grauwerte von den Referenz-Grauwerten außerhalb des zulässigen Bereichs liegt. Diese Bewertung kann nicht nur nach dem Durchführen des Justierverfahrens in der vorstehend beschriebenen Weise, sondern auch vor dem Start einer Justierung erfolgen, bei der der wenigstens eine Parameter der Kameraeinstellung der zu justierenden Kamera zum Zweck des Ermittelns einer optimalen oder zumindest zulässigen Einstellung variiert wird. Wird bereits vor dem Start einer Justierung eine ausreichende Justierung festgestellt, so ist die Durchführung einer Justierung nicht erforderlich.

Wird die zu prüfende und/oder zu justierende Kamera als ausreichend (korrekt) justiert erkannt, so kann die Kamera entsprechend gekennzeichnet werden. Dies kann beispielsweise durch eine entsprechende unmittelbare optische Kennzeichnung (Prüfzeichen) erfolgen oder durch eine separate mittelbare Kennzeichnung (Prüfzertifikat), die, beispielsweise über die Seriennummer der Kamera verlinkt, in einer Datenbank abgelegt wird. Andernfalls kann die Kamera als fehlerhaft gekennzeichnet und/oder aussortiert werden. Die Kennzeichnung kann auch in diesem Fall unmittelbar oder mittelbar erfolgen. Anstelle einer solchen Gut/Schlecht-Aussage kann auch eine Klassifizierung der Kamera in Qualitätsstufen vorgenommen werden, wobei die Qualitätsstufen beispielsweise durch verschiedene Toleranzbereiche für die Abweichungen der Ist-Grauwerte von den Referenzgrauwerten definiert sein können. Die Klassierung entsprechend einer so bestimmten Qualitätsstufe kann ebenfalls in der vorstehenden Weise der Kamera zugeordnet werden.

Nach einer weiteren Ausgestaltung der Erfindung kann zur Justierung der zu prüfenden und/oder zu justierenden Kamera (Justierung im engeren Sinne) der wenigstens eine Parameter der Einstellung, beispielsweise die Belichtungszeit und/oder die Empfindlichkeit, so variiert werden, dass bei Aufnehmen wenigstens eines weiteren Bildes des optischen Prüfnormals die aus dem wenigstens einen weiteren Bild ermittelten Ist-Grauwerte für die Teilflächen jeweils innerhalb eines vorgegebenen Wertebereichs für zulässige Ist-Grauwerte liegen, oder eine Abweichung der Ist-Grauwerte von den Referenz-Grauwerten innerhalb eines vorgegebenen zulässigen Bereichs liegt. Gelingt es, den wenigstens einen Parameter so zu variieren, dass eine der vorgenannten Bedingungen erfüllt ist, so kann die Kamera als ausreichend justiert erkannt und ggf. entsprechend gekennzeichnet werden.

Diese Variante eines Justierverfahrens kann also auch so durchgeführt werden, dass nach jedem Schritt geprüft wird, ob die Abweichung der Ist-Grauwerte von den Referenz-Grauwerten in einem zulässigen Bereich liegt. Sobald die auf diese Weise ermittelte Abweichung in einem zulässigen Bereich liegt, kann das Verfahren beendet werden. Anstelle einer Abweichung kann auch für jeden Grauwertpunkt, d. h. für jede der Teilflächen mit einem bestimmten Grauwert, untersucht werden, ob der von der Kamera ermittelte Ist-Grauwert innerhalb eines dem betreffenden Grauwertpunkt bzw. der betreffenden Teilfläche zugeordneten Wertebereichs für zulässige Ist-Grauwerte liegt. Ist nach der Durchführung eines derartigen Verfahrensschritts die zu erfüllende Bedingung erfüllt, beispielsweise weil sämtliche von der Kamera aus dem mit der betreffenden Einstellung aufgenommenen Bild ermittelten Ist-Grauwerte innerhalb der vorgegebenen Wertebereiche für zulässige Ist-Grauwerte liegen, so kann das Verfahren beendet werden. Die Kennzeichnung als korrekt justiert kann dann wie vorstehend beschrieben vorgenommen werden.

Das Justierverfahren kann erfolglos abgebrochen werden, wenn ein entsprechendes Negativ-Abbruchkriterium erfüllt ist. Beispielsweise kann eine maximale Anzahl von Justierschritten (d. h. Aufnehmen eines Bildes mit jeweils einer vorgegebenen Einstellung und Prüfung, ob die ermittelte Abweichung in einem zulässigen Bereich liegt) vorgegeben werden. Ist nach Durchführen der maximalen Anzahl von Justierschritten noch keine ausreichende Justierung erreicht, so kann die Kamera als fehlerhaft erkannt und entsprechend gekennzeichnet und/oder aussortiert werden.

Nach einer Ausführungsform des Verfahrens kann der zu prüfenden und/oder zu justierenden Kamera eine den wenigstens einen Parameter umfassende Justiereinstellung zugeordnet werden, welche den Wert des wenigstens einen variierten Parameters als Justierdaten (oder als einen Teil der Justierdaten) umfasst und für welche die zu prüfende und/oder zu justierende Kamera als ausreichend justiert erkannt wurde. Die Justiereinstellung ist diejenige Einstellung, mit der die Kamera später im Einsatz betrieben wird. Das Zuordnen kann vorzugsweise durch das Speichern der Justierdaten (zumindest des Wertes des wenigstens einen Parameters) in einem hierfür vorgesehenen Justierdatenspeicher der betreffenden Kamera erfolgen. Dieser JustierdatenSpeicher kann insbesondere als ein vor Zugriffen durch nicht berechtigte Personen geschützter, nicht-flüchtiger Speicher ausgebildet sein. Das Zuordnen der Justierdaten zur betreffenden Kamera kann auch dadurch erfolgen, dass die Justierdaten in einem von der Kamera separaten Speicher gespeichert werden und ein Link zwischen den Justierdaten und der betreffenden Kamera geschaffen wird. Der Link kann beispielsweise durch das Zuordnen der Seriennummer der Kamera zu den Justierdaten erzeugt werden. Auch der externe Speicher kann selbstverständlich vor Zugriffen durch nicht berechtigte Personen geschützt sein.

Nach einer weiteren Ausführungsform des Verfahrens kann aus einem Vergleich der Ist-Grauwerte und der Referenz-Grauwerte eine Aussage getroffen werden, ob die zu prüfende und/oder zu justierende Kamera mit der Einstellung, mit welcher die Ist-Grauwerte ermittelt wurden, in einem Arbeitsmodus der Kamera mit ausreichender Qualität korrigierbare Bilder liefert. Falls ja, kann aus den Ist-Grauwerten und den Referenz-Grauwerten ein Operator, vorzugsweise ein Punktoperator, zur Korrektur der Grauwerte von Bildern ermittelt werden, welcher die Kamera in einem Arbeitsmodus erfasst. Es wird also keine Justierung im engeren Sinne, sondern eine Korrektur (des Bildes) der Kamera durchgeführt.

Das Treffen dieser Aussage kann beispielsweise in der Weise erfolgen, dass die maximale Differenz zwischen den Ist-Grauwerten und den Referenz-Grauwerten (für jeweils dieselbe Teilfläche) bestimmt wird. Ist die maximale Differenz zu groß, kann die Korrigierbarkeit verneint werden.

Die Korrigierbarkeit ist insbesondere auch dann zu verneinen, wenn der Vergleich zwischen den Ist-Grauwerten und den Referenz-Grauwerten erkennen lässt, dass eine Korrektur zu einem korrigierten Bild führen würde, das extrem verrauscht ist (beispielsweise weil die Ist-Grauwerte weit unter den Referenz-Grauwerten liegen), oder wenn der Vergleich oder allein die Ist-Grauwerte erkennen lassen, dass die zu justierende Kamera bei einem oder mehreren Ist-Grauwertdaten in die Sättigung gelangt ist.

Der Korrekturoperator zur Korrektur des Grauwertes von Bildern, die in einem Arbeitsmodus von der zu prüfenden und/oder zu justierenden Kamera geliefert werden, kann beispielsweise durch das Ermitteln eines Korrekturwertes für jede mögliche Graustufe (z.B. 255 mögliche Graustufen bei einer 8-Bit Darstellung der Graustufen) erzeugt werden. Zur Bestimmung eines solchen Punktoperators können die Referenz-Grauwerte und die Ist-Grauwerte in geeigneter Weise verknüpft werden. Aus jedem Ist-Grauwert eines Pixels des von der zu justierenden Kamera gelieferten Bildes (unabhängig davon, ob die Kamera selbst bereits ein digitales Bildsignal liefert oder ein analoges Bildsignal, das erst durch Digitalisierung in ein digitales Bild umgewandelt wird) wird dann durch Anwenden des Punktoperators ein korrigierter Grauwert zugeordnet, wodurch ein korrigiertes digitales Bild erzeugt wird, das dann weiteren Verarbeitungsschritten, insbesondere Auswertungsschritten, unterzogen werden kann.

Der Korrekturoperator kann beispielsweise so ausgebildet sein, dass zu jedem Grauwert eines Pixels (vorzeichenrichtig) ein Korrekturwert addiert wird. Zur Bestimmung der Korrekturwerte für sämtliche Graustufen kann beispielsweise für jede von N Teilflächen mit unterschiedlichen Graudarstellungen die Differenz ΔGᵢ = G_{ist,i} - G_{ref,i} gebildet werden, wobei mit i die Nummer der betreffenden Teilfläche (1≤i≤N), mit G_{ist,i} der Ist-Grauwert der betreffenden Teilfläche, mit G_{ref,i} der Referenz-Grauwert der betreffenden Teilfläche und mit ΔGᵢ die Grauwertdifferenz für die betreffende Teilfläche bezeichnet sind. Diese Punkte für die Grauwertdifferenzen können dann als Stützpunkte für eine (lineare oder nicht-lineare) Interpolation verwendet werden, um auf diese Weise für jede Graustufe einen Korrekturwert des Korrekturoperators zu bestimmen. Die Stützpunkte für die Interpolation können hierzu in einem kartesischen (x,y) Koordinatensystem aus jeweils den Referenz-Grauwerten G_{ref,i} als x-Koordinate und aus der Grauwertdifferenz als y-Koordinate bestehen.

Es sei ausdrücklich darauf hingewiesen, dass die vorgeschriebenen Varianten zur Justierung einer Kamera im engeren Sinne und zur Korrektur (des Bildes) einer Kamera sowohl isoliert voneinander, als auch in Kombination verwendet werden können. Insbesondere kann zunächst eine Justierung im engeren Sinne vorgenommen und der verbleibende Restfehler durch eine nachgeschaltete Korrektur weiter verringert oder sogar im Wesentlichen eliminiert werden.

Die vorgegebene Einstellung der Referenz-Kamera kann dabei so beschaffen oder gewählt sein, dass mit dieser Einstellung eine optimale oder zumindest ausreichende Qualität des wenigstens einen aufgenommenen Referenzbildes erreicht wird. Die Bildqualität kann hierbei durch einen oder mehrere Parameter, beispielsweise den Kontrast, die Schärfe der Abbildung von Kanten, die Helligkeit etc., definiert sein.

Nach einer Ausgestaltung der Erfindung kann das Verfahren insbesondere dann Verwendung finden, wenn die Referenz-Kamera Bestandteil einer Referenz-Inspektionsvorrichtung zum Prüfen von optischen Strukturen ist und wenn die zu prüfende und/oder zu justierende Kamera Bestandteil einer zu prüfenden und/oder zu justierenden Inspektionsvorrichtung zum Prüfen von optischen Strukturen ist.

Wie bereits vorstehend erwähnt, werden derartige Inspektionsvorrichtungen in vielfältiger Weise verwendet, beispielsweise zum Prüfen von optischen Codes, die auf Produkten oder Verpackungen aufgebracht sind oder zum Prüfen von beliebigen anderen optischen Strukturen, beispielsweise eine Prüfung, ob auf einer automatisch bestückten Leiterplatte sämtliche Bauelemente korrekt vorhanden und montiert sind. Es sei darauf hingewiesen, dass der Begriff "Inspektionsvorrichtung" in der vorliegenden Beschreibung sowohl für Vorrichtungen verwendet wird, die tatsächlich bestimmte Qualitätsmerkmale einer optischen Struktur prüfen und gegebenenfalls bewerten, als auch für reine Erkennungsvorrichtungen, die einer optischen Struktur einen Bedeutungsinhalt zuordnen. Eine solche Erkennungsvorrichtung kann insbesondere ein Lesegerät für optische Codes sein.

Nach einer weiteren Ausführungsform des Verfahrens nach der Erfindung kann die Einstellung der Referenz-Kamera unter Verwendung eines optischen Urnormals erfolgten, auf welchem mehrere optische Strukturen vorgesehen sind, die jeweils eine zugeordnete Abbildungsqualitätsstufe aufweisen, wobei die optischen Strukturen beispielsweise optische Codes, insbesondere Strichcodes oder Matrixcodes, sind, und wobei die Einstellung der Referenz-Kamera so ermittelt wird, dass aus einem mit dieser Einstellung aufgenommenen Bild des optischen Urnormals den optischen Strukturen die korrekte Qualitätsstufe zugeordnet wird.

Im Fall von Inspektionsvorrichtungen für optische Codes sind, wie bereits vorstehend erwähnt, entsprechende Qualitätsstufen in den Normen ISO/IEC 15416 für Strichcodes und ISO/IEC 15415 für Matrixcodes festgelegt. Es ist jedoch selbstverständlich ebenfalls möglich, für beliebige andere optische Strukturen, denen ein Bedeutungsinhalt zugeordnet werden soll, geeignete Qualitätsstufen zu definieren. Die Referenzkamera bzw. die entsprechende Referenz-Inspektionsvorrichtung wird zur Durchführung des Verfahrens (d. h. zur Bestimmung der Referenz-Grauwerte) so eingestellt, dass sie ein möglichst optimales Bild des Urnormals erzeugt und jedenfalls allen (oder tatsächlich benötigten) auf dem Urnormal vorgesehenen optischen Strukturen die korrekte Abbildungsqualitätsstufe zuordnet.

Nach dem erfindungsgemäßen Verfahren wird die zu prüfende und/oder zu justierende Kamera zwar nur hinsichtlich des Erfassens von Grauwerten mit der Referenz-Kamera verglichen bzw. auf diese Eigenschaft der Referenz-Kamera justiert. Dabei wird vorausgesetzt, dass in der Praxis andere, (weniger kritische) Parameter der zu prüfenden und/oder zu justierenden Kamera oder Inspektionsvorrichtung entweder vernachlässigbar sind, oder auf andere Weise sichergestellt werden kann, dass die Werte für diese Parameter in zulässigen bzw. korrekten Wertebereichen liegen.

Beispielsweise kann bei Kameras oder Inspektionsvorrichtungen mit fester Brennweite das Einhalten eines zulässigen Objektabstands durch eine korrekte Montage bzw. Positionierung der Kamera bzw. Inspektionsvorrichtung gewährleistet werden. Das Herstellen einer Kamera mit einer definierten festen Brennweite kann auch durch entsprechende Maßnahmen bei der Herstellung, insbesondere das Einhalten entsprechender Montagetoleranzen und das Verwenden von optischen Elementen innerhalb zulässiger Toleranzen, gewährleistet werden. Eine nachträgliche unerwünschte Veränderung der Brennweite im Lauf der Zeit ist kaum zu erwarten.

Gleiches gilt für die Auflösung einer digitalen Kamera. Auch hier ist kaum eine Veränderung dieser Eigenschaft im Lauf der Lebensdauer der Kamera zu erwarten.

Damit bleibt als wesentlicher kritischer Parameter in vielen Fällen die Bildhelligkeit als kritischer Parameter bei der Erzeugung eines Bildes einer zu prüfenden bzw. zu erkennenden optischen Struktur. Die Bildhelligkeit ist abhängig von der Belichtungszeit bzw. der Empfindlichkeit der Kamera bzw. des Bildsensors, einschließlich einer elektrischen Verstärkung des erzeugten elektrischen Bildsignals. Die Empfindlichkeit und auch die Linearität eines Bildsensors, insbesondere eines digitalen Bildsensors, können in relativ breiten Grenzen schwanken und sich auch im Lauf der Lebensdauer der Kamera verändern, beispielsweise durch Alterungsprozesse des Bildsensors. Auch die Beleuchtungseinrichtung bzw. die Einrichtung zur Erzeugung einer das Prüfnormal durchdringenden Strahlung unterliegt einer Alterung.

An dieser Stelle sei darauf hingewiesen, dass der Bildsensor für das Verfahren und die Vorrichtung nach der Erfindung sowohl als Zeilensensor (ein- oder mehrzeilig) zur Abtastung der zu erfassenden optischen Struktur ausgebildet sein kann (durch eine Relativbewegung von Zeilensensor und der zu erfassenden optischen Struktur), oder als Flächensensor, welcher die zu erfassende optische Struktur auf einmal erfasst (d. h die Fläche des Sensors ist so groß gewählt, dass die zu erfassende optische Struktur voll auf der Sensorfläche abgebildet werden kann).

Der Vorteil des Verfahrens nach der Erfindung besteht also zum einen darin, dass auf einfache Weise ein Abgleich der Eigenschaften zur Erfassung von Grauwerten einer zu prüfenden und/oder justierenden Kamera in Bezug auf eine Referenzkamera durchgeführt werden kann. Zum anderen kann in solchen Fällen, in denen weitere Parameter oder Eigenschaften der zu prüfenden und/oder zu justierenden Kamera unkritisch sind oder auf andere Weise einfach überprüft bzw. sichergestellt werden können, bei einer für korrekt befundenen oder korrekt justierten zu prüfenden bzw. zu justierenden Kamera davon ausgegangen werden, dass diese Kamera auch in Bezug auf die anderen Parameter oder Eigenschaften nicht in unzulässiger Weise von der Referenzkamera abweicht.

Das Verfahren ermöglicht daher beim Hersteller derartiger Kameras oder Inspektionsvorrichtungen eine einfache Qualitätssicherung (Prüfung) oder Justierung der Kameras. Zudem kann auch beim Anwender der Kamera, d. h. im Feld, auf einfache Weise eine Überprüfung bzw. erneute Justierung der Kamera mittels eines erfindungsgemäßen optischen Prüfnormals vorgenommen werden.

Eine optische Inspektionsvorrichtung nach der vorliegenden Erfindung umfasst eine Kamera und eine Auswerte- und Steuereinheit, welcher das von der Kamera erzeugte Bildsignal oder von dieser erzeugte digitale Bilddaten zugeführt werden. Die Auswerte- und Steuereinheit ist so ausgebildet, dass sie in einen Prüfmodus überführbar ist, in welchem das Verfahren nach der Erfindung durchgeführt wird. Das heißt, die Auswerte- und Steuereinheit steuert die Kamera so an, dass wenigstens ein Bild eines mehrere Teilflächen mit jeweils unterschiedlichen Graudarstellungen aufweisenden optischen Prüfnormals mit einer vorgegebenen, wenigstens einen Parameter umfassenden Einstellung der Kamera aufgenommen wird. Als nächster Schritt im Prüfmodus ermittelt die Auswerte- und Steuereinheit aus dem ihr zugeführten Bildsignal oder den digitalen Bilddaten Ist-Grauwerte für die Teilflächen aus dem wenigstens einen Bild.

Selbstverständlich können auch mehrere Bilder aufgenommen und für jedes Pixel des Bildes ein Mittelwert gebildet werden, um das Rauschen der Bilddaten zu reduzieren.

Zur Ermittlung der Ist-Grauwerte für die mehreren Teilflächen kann die Auswerte- und Steuereinheit jeweils die gesamte Teilfläche oder auch eine bestimmte Teilfläche verwenden. Eine Teilfläche kann beispielsweise anhand der reflektierten äußeren Grenzen der betreffenden Teilfläche ermittelt werden, beispielsweise durch das Ausblenden eines Randbereichs mit einer vorgegebenen Breite. Der Ist-Grauwert für die gesamte relevante Fläche kann dann als Mittelwert der Graustufen aller Pixel der relevanten Fläche ermittelt werden. Diese Vorgehensweise kann selbstverständlich ebenfalls bei der Bestimmung der Referenz-Grauwerte mittels der Referenzkamera verwendet werden.

In einem abschließenden Schritt vergleicht die Auswerte- und Steuereinheit die Ist-Grauwerte mit den betreffenden Referenz-Grauwertdaten oder Wertebereichen für zulässige Ist-Grauwerte zum Treffen einer Aussage über eine genügende oder ungenügende Justierung der Kamera. Die Referenz-Grauwerte können in der Auswerte- und Steuereinheit gespeichert sein oder dieser von außen zugeführt werden. Gleiches gilt für die Wertebereiche für zulässige Ist-Grauwerte. Erfindungsgemäß sind diese Daten jedenfalls auf einem Träger des Prüfnormals in optisch lesbarer Form aufgebracht und/oder in einem im oder auf dem Träger vorgesehenen Speicher gespeichert.

Die Auswerte- und Steuereinheit kann selbstverständlich auch so ausgebildet sein, dass diese nicht nur eine Prüfung (d. h. Bewertung) der Kamera durchführt, sondern auch weitere Verfahrensschritte zur Justierung (d. h. zur Justierung im engeren Sinne oder zur Korrektur der Bilddaten), wie sie vorstehend erläutert wurden.

Nach einer Ausgestaltung nach der Erfindung kann eine mit der optischen Inspektionsvorrichtung lösbar verbindbare, vorzugsweise aufsteckbare, oder permanent mit der optischen Inspektionsvorrichtung verbundene Haltevorrichtung für das optische Prüfnormal vorgesehen sein. Die Haltevorrichtung ist dabei so ausgebildet, dass das optische Prüfnormal in einem definierten Abstand (in der optischen Achse) zur Kamera gehalten wird. Damit kann auf einfache Weise eine Prüfung und/oder Justierung der Kamera vorgenommen werden.

Die Haltevorrichtung ist dabei vorzugsweise auch so ausgebildet, dass das optische Prüfnormal in einer definierten Position in einer Ebene im Wesentlichen senkrecht zur optischen Achse der Kamera gehalten wird, wobei das optische Prüfnormal vorzugsweise in die Haltevorrichtung einsetzbar und aus dieser entnehmbar ist.

Die Haltevorrichtung ist dabei auch so ausgestaltet, dass das Prüfnormal in im Wesentlichen derselben Position in der zu prüfenden und/oder zu justierenden Inspektionsvorrichtung gehalten wird, wie in der Referenz-Vorrichtung.

Das Verfahren zur Herstellung eines optischen Prüfnormals zum Prüfen und/oder Justieren einer Kamera nach der Erfindung wurde bereits vorstehend in Verbindung mit dem gesamten Prüf- und/oder Justierverfahren im Einzelnen erläutert. Hierbei wird ein vorzugsweise platten- oder kartenförmiger Träger für das Prüfnormal hergestellt oder für die weiteren Schritte verwendet, wobei auf einer Oberfläche des Trägers mehrere Teilflächen mit unterschiedlichen Graudarstellungen vorgesehen sind. Anschließend wird ein Referenzbild des Trägers mittels einer vorzugsweise im Wesentlichen baugleich mit der zu prüfenden und/oder zu justierenden Kamera ausgebildeten Referenzkamera aufgenommen, wobei hierzu die Referenzkamera eine vorgegebene, wenigstens einen Parameter umfassende Einstellung aufweist. Schließlich werden in der vorgeschriebenen Weise Referenz-Grauwerte für die Teilflächen aus dem Referenzbild ermittelt und diese dem Träger zugeordnet.

Das Zuordnen der Referenz-Grauwerte zu dem Träger erfolgt durch Aufbringen der Daten auf den Träger in optisch lesbarer Form und/oder durch Speichern der Referenz-Grauwerte auf einem im oder auf dem Träger vorgesehenen Speicher.

Nach einer Ausführungsform können dem Träger auch weitere Informationen und/oder Daten zugeordnet werden, insbesondere ein Herstellungsdatum, ein die Gültigkeit des optischen Prüfnormals definierendes Enddatum, eine Nutzungszeitspanne, eine Seriennummer des optischen Prüfnormals, eine Seriennummer und/oder eine Typinformation der zu prüfenden und/oder zu justierenden Kamera und/oder eine Seriennummer und/oder eine Typinformation der Referenzkamera.

Ein derart einfaches Prüfnormal kann insbesondere auch von einem Hersteller von Kameras oder optischen Inspektionsvorrichtungen mit einer Kamera selbst erstellt werden. Es ist zudem möglich, ein solches Prüfnormal auch einem Anwender einer solchen Kamera oder Inspektionsvorrichtung zur Verfügung zu stellen, so dass dieser die Prüfung und/oder Justierung der Kamera selbst, d. h. im Feld, vornehmen kann. Es ist ebenfalls möglich, ein solches Prüfnormal einer Kamera bzw. Inspektionsvorrichtung zuzuordnen, wobei die Zuordnung beispielsweise durch die Seriennummer der Kamera oder Inspektionsvorrichtung erfolgen kann (beispielsweise durch Aufdrucken der Seriennummer der Kamera bzw. Inspektionsvorrichtung auf dem Prüfnormal oder Aufkleben eines entsprechenden Etiketts).

Die Einstellung der Referenzkamera zur Herstellung des optischen Prüfnormals kann in der vorgeschriebenen Art und Weise durch die Verwendung eines Urnormals erfolgen.

Weitere Ausführungsformen des Verfahrens zum Prüfen und/oder Justieren einer Kamera bzw. zur Herstellung eines optischen Prüfnormals und der optischen Inspektionsvorrichtung nach der Erfindung zum Prüfen und/oder Erkennen von optischen Strukturen ergeben sich aus den abhängigen Ansprüchen.

Es sei darauf hingewiesen, dass das erfindungsgemäße Verfahren zum Prüfen und/oder Justieren einer Kamera bzw. die erfindungsgemäße optische Inspektionsvorrichtung, die eine derartige Kamera aufweist, und das erfindungsgemäße Verfahren zur Herstellung eines geeigneten optischen Prüfnormals auch auf dem Gebiet der Röntgenstrahlung oder Terahertzstrahlung eingesetzt werden können. Der Begriff eines optischen Prüfnormals umfasst also auch ganz allgemein solche Prüfnormale, von denen einer beliebig ausgestalteten Kamera ein optisches Abbild erzeugt werden kann. Neben rein optischen Kameras, welche Licht im sichtbaren elektromagnetischen Spektrum erfassen, kann jede Kamera verwendet werden, die zur Erfassung einer elektromagnetischen Strahlung beliebiger Frequenz ausgebildet ist, beispielsweise Röntgenstrahlung oder Strahlung im Terahertz-Bereich.

Da Röntgenstrahlung und auch Terahertz-Strahlung üblicherweise zur Durchstrahlung von Objekten eingesetzt wird, kann das optische Prüfnormal nach der Erfindung auch so ausgestaltet sein, dass die Teilflächen mit unterschiedlichen Graudarstellungen nicht im sichtbaren optischen Spektrum einen Grauwert erzeugen, sondern einen Grauwert im betreffenden maßgeblichen Spektralbereich, in welchem eine Prüfung bzw. Justierung der Kamera erfolgen soll. Die Teilflächen können beispielsweise aus verschiedenen Materialien bestehen und/oder unterschiedliche Dicken aufweisen, so dass bei einer Durchstrahlung mit einer Strahlung, die ein vorgegebenes Spektrum (beliebiger Frequenlage) aufweist und einem Detektieren der Strahlung mit der betreffenden Kamera jeweils ein bestimmter Grauwert erzeugt wird (beispielsweise abhängig vom Spektrum der detektierten Strahlung und/oder der Intensität der detektierten Strahlung, im Bereich des strahlungsempfindlichen Detektors der Kamera). Die Teilflächen bzw. die Materialien der Teilflächen können auf der Oberfläche des Trägers vorgesehen oder auch im Material des Trägers eingebettet sein.

Die Erfindung wird nachstehend anhand eines in der Zeichnung dargestellten Ausführungsbeispiels näher erläutert. In der Zeichnung zeigen:
- Fig. 1: eine perspektivische Ansicht einer optischen Inspektionsvorrichtung zum Prüfen und/oder Erkennen von optischen Strukturen, insbesondere von optischen Codes, mit einer Haltevorrichtung und ein in der Haltevorrichtung gehaltenes optisches Prüfnormal;
- Fig. 2: eine perspektivische Darstellung des optischen Prüfnormals in Fig. 1;
- Fig. 3: ein schematisches Blockdiagram einer Inspektionsvorrichtung nach Fig. 1 in einer Einsatzumgebung;
- Fig. 4: eine vergrößerte Darstellung der optischen Komponenten eines Prüfnormals ähnlich Fig. 2;
- Fig. 5: Darstellungen von Bildern der Graudarstellungen des Prüfnormals in Fig. 4, aufgenommen von einer Referenzkamera, wobei jeweils eine der Teilflächen hinsichtlich des Grauwertes eines inneren Teils der betreffenden Teilfläche erfasst und ausgewertet wird (Fig. 5a bis 5d);
- Fig. 6: Darstellungen von Bildern der Graudarstellungen des Prüfnormals in Fig. 4, aufgenommen von einer zu prüfenden und/oder zu justierenden Kamera, wobei jeweils eine der Teilflächen hinsichtlich des Grauwertes eines inneren Teils der betreffenden Teilfläche erfasst und ausgewertet wird (Fig. 6a bis 6d);
- Fig. 7: ein Diagramm zur Erläuterung der Korrektur der Grauwerte des Bildes einer zu prüfenden und/oder zu justierenden Kamera mit einer Kurve, die die Abweichung der von der zu prüfenden und/oder zu justierenden Kamera erfassten Grauwerte von den von der Referenzkamera erfassten Grauwerten des Prüfnormals darstellt; und
- Fig. 8: eine schematische Darstellung der Prüfinformationen eines Urnormals zur optimalen Einstellung einer Referenzkamera.

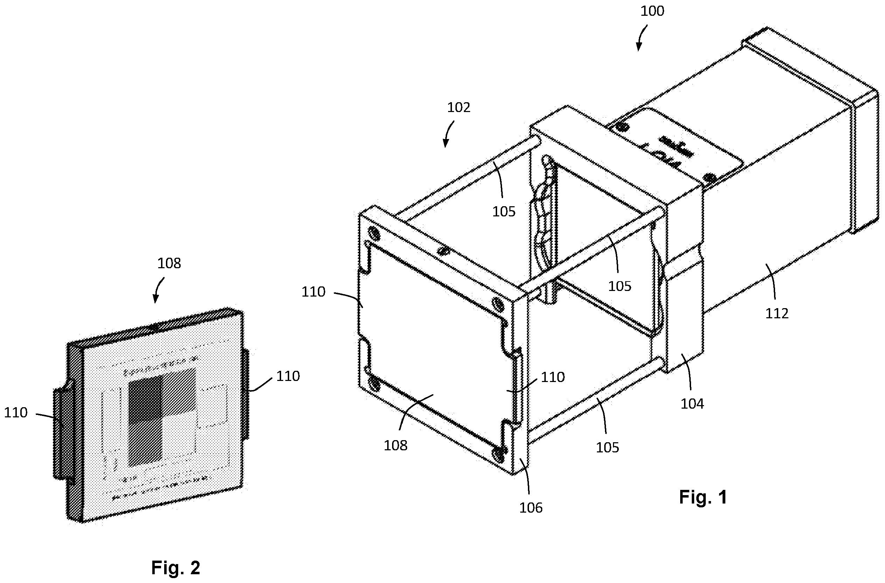

Fig. 1 zeigt eine Kamera 100, die insbesondere als graustufenfähige digitale Kamera mit einem entsprechenden digitalen Bildsensor ausgebildet sein kann. Die Kamera 100 ist hinsichtlich ihrer Eigenschaften, insbesondere ihrer Abbildungsoptik (nicht dargestellt) und hinsichtlich ihrer Auflösung so ausgebildet, dass sie für eine Inspektionsvorrichtung zum Prüfen und/oder Erkennen von optischen Strukturen, insbesondere von optischen Codes, verwendbar ist.

Eine graustufenfähige digitale Kamera 100 kann beispielsweise so ausgebildet sein, dass der Grauwert der Bildinformation, die von jedem Pixel eines digitalen Sensors der Kamera 100 erzeugt wird, 255 Graustufen annehmen kann. Die Bildinformation jedes Pixels kann somit durch 8 Bit dargestellt werden.

Die Kamera 100 kann jedoch auch als digitale Farbkamera ausgebildet sein, wobei in diesem Fall aus dem digitalen Farbsignal bzw. den einzelnen Komponenten des digitalen Farbsignals (beispielsweise den Komponenten R, B, G eines RGB-Farbsignals) für jedes Pixel ein entsprechender Grauwert ermittelt werden kann. Für die Umrechnung bzw. Umsetzung eines Farbsignals in ein Graustufensignal bzw. die Umsetzung eines Farbbildes in ein Graustufenbild existieren verschiedene Verfahren, die einem Fachmann bekannt sind. Auf eine nähere Erläuterung dieser Verfahren kann daher im Rahmen der vorliegenden Beschreibung verzichtet werden. Schließlich kann die Kamera auch als Röntgenkamera oder als Terahertz-Kamera bzw. ganz allgemein als Kamera ausgebildet sein, die in der Lage ist, elektromagnetische Strahlung außerhalb des Spektrums des sichtbaren Lichts zu erfassen.

In Fig. 1 ist die Kamera 100 mit einer Halterung 102 verbunden, die aus einem ersten, U-förmig ausgebildeten Rahmenteil 104 und einem zweiten, als rechteckiger geschlossener Ring ausgebildeten Rahmenteil 106, sowie vier Verbindungsstreben 105 besteht, welche die beiden rechteckigen Rahmenteile 104, 106 an den Eckbereichen miteinander verbinden.

Wie aus Fig. 1 erkennbar, dient das erste Rahmenteil 104 zum Aufsetzen, vorzugsweise Aufschieben auf den vorderen Bereich der Kamera 100. Das Rahmenteil 104 ist hierzu so ausgebildet, dass es in einer definierten Position senkrecht zur Längsachse der Kamera 100 mit dieser verbunden ist. Vorzugsweise können die Halterung 102 bzw. das Rahmenteil 104 so beschaffen sein und so zusammenwirken, dass das Rahmenteil 104 in der definierten Position mit der Kamera 100 lösbar verrastet.

Das zweite Rahmenteil 106 dient zur Aufnahme bzw. Halterung eines Prüfnormals 108, dessen Funktion weiter unten erläutert wird. Das Prüfnormal 108 ist, wie aus Fig. 1 ersichtlich, plattenartig oder kartenartig ausgebildet. An seinem im Wesentlichen rechteckigen Umfang weist das Prüfnormal 108 seitliche Fortsätze 110 auf, die in entsprechende Ausnehmungen des Rahmenteils 106 eingreifen. Auf seiner der Kamera 100 zugewandten Oberfläche weist das Prüfnormal 108 optische Informationen auf (siehe Fig. 2), die zur Prüfung und/oder Justierung der Kamera 100 dienen. Wie eingangs ausgeführt, können die optischen Informationen unmittelbar auf der Oberfläche eines Trägers des Prüfnormals vorgesehen oder auch in das Material des Trägers eingebettet sein.

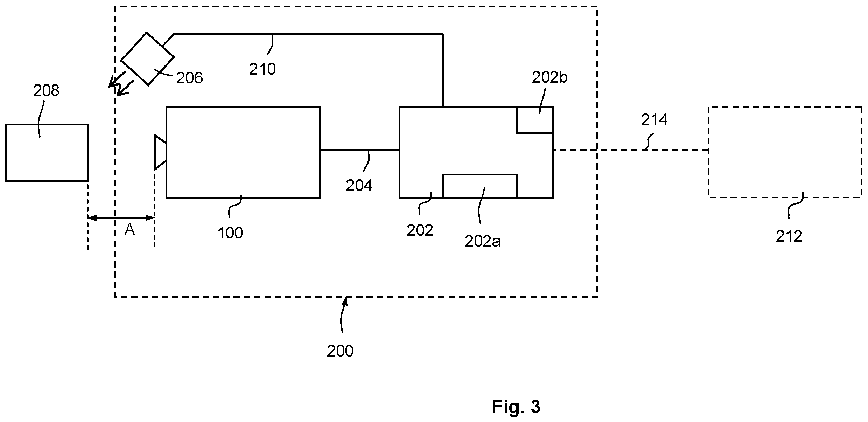

Fig. 3 zeigt ein schematisches Blockdiagramm einer Inspektionsvorrichtung 200 zum Prüfen und/oder Erkennen von optischen Strukturen, beispielswese von optischen Codes in Form von Strichcodes oder Matrixcodes. Die Inspektionsvorrichtung 200 besteht aus einer Kamera 100, wie sie vorstehend anhand der Fig. 1 erläutert wurde, und einer Auswerte- und Steuereinheit 202, die über eine Kommunikationsverbindung 204 in Verbindung stehen. Die Kommunikationsverbindung 204 kann, wie alle weiteren Kommunikationsverbindungen auch, festverdrahtet oder drahtlos, insbesondere per verschlüsselte Kommunikation, realisiert sein.

Weiterhin umfasst die Inspektionsvorrichtung 200 eine Beleuchtungseinheit 206 zur ausreichenden Ausleuchtung eines zu inspizierenden (zu prüfenden und/oder zu erkennenden) Objekts 208. Das Objekt 208 steht exemplarisch für eine Vielzahl von Objekten eines Warenstroms, der von der Inspektionsvorrichtung 200 in hoher Geschwindigkeit inspiziert werden soll. Objekte 208 werden hierbei als Warenstrom nacheinander in einem Soll-Abstand A zur Kamera 100 vorbeigeführt, wobei die Abweichungen des tatsächlichen Abstands vom Soll-Abstand A innerhalb vorgegebener Toleranzen liegen müssen, um eine ausreichend scharfe Abbildung der zu inspizierenden Oberfläche eines Objekts 208 zu gewährleisten. Der tatsächliche Abstand muss dabei innerhalb des Schärfentiefebereichs der Kamera 100 liegen.

Zur Inspektion eines Objekts 208 steuert die Auswerte- und Steuereinheit 202 die Kamera 100 über die Kommunikationsverbindung 204 und die Beleuchtungseinheit 206 über eine Kommunikationsverbindungen 210 in geeigneter Weise an, um Bilddaten des Objekts 208 zu erhalten. Hierzu kann die Auswerte- und Steuereinheit 202 die Beleuchtungseinheit 206 so ansteuern, dass das Objekt 208 mit einer vorbestimmten, definierten optischen Leistung angestrahlt wird. Die optische Leistung wird von der Auswerte- und Steuereinheit 202 während des Zeitraums, in dem die Bildaufnahme erfolgt (Belichtungszeit) vorzugsweise konstant gehalten. Die Beleuchtungseinheit kann insbesondere eine oder mehrere Leuchtdioden (LEDs, nicht dargestellt) umfassen.

Wie vorstehend erläutert, kann die Beleuchtungseinheit auch zur Erzeugung einer das Prüfnormal durchdringenden Strahlung, insbesondere Röntgenstrahlung oder Terahertz-Strahlung ausgebildet sein. In diesem Fall ist die Beleuchtungseinrichtung so zu positionieren, dass das Prüfnormal bzw. das zu durchstrahlende Objekt zwischen der Beleuchtungsheit und der Kamera 100 positioniert ist.

Der Speicher 202a dient zum Speichern von Daten, insbesondere von Werten für Parameter, mittels welcher die Kamera 100 und vorzugsweise zusätzlich die Beleuchtungseinheit 206 zum Aufnehmen von Bildern des Objekts 208 angesteuert werden kann. Hierbei kann es sich auch um Parameterwerte handeln, die zur Justierung der Kamera 100 dienen. Diese Parameterwerte können der Auswerte- und Steuereinheit 202 entweder von einer externen Einheit zugeführt werden und/oder von der Auswerte- und Steuereinheit 202 aus ihr zugeführten Signalen oder Daten ermittelt werden, insbesondere dem Bildsignal oder den Bilddaten, welche der Auswerte- und Steuereinheit 202 von der Kamera 100 über die Kommunikationsverbindung 204 zugeführt werden. Als im Speicher 202a zu speichernde Daten oder Parameterwerte kommen insbesondere Werte für die Belichtungszeit, Blende, Brennweite, Weißabgleich und Empfindlichkeit der Kamera in Frage sowie Parameterwerte für die Ansteuerung der Beleuchtungseinheit 206, beispielsweise den Strom und/oder die Spannung zur Ansteuerung der eigentlichen Leuchtmittel der Beleuchtungseinheit 206.

Es sei darauf hingewiesen, dass die Auswerte- und Steuereinheit 202 oder auch nur einzelne Bestandteile bzw. Funktionalitäten hiervon auch integriert mit der Kamera 100 ausgebildet oder in dieser realisiert sein können. Insbesondere das Steuern der Beleuchtungseinheit 206 oder auch das Speichern von Parameterwerten kann in der Kamera 100 erfolgen, d. h. der Speicher 202a und ggf. auch ein Schalter 202b, der unter anderem den Zugriff auf den Speicher 202a freigeben kann, können in der Kamera 100 bzw. innerhalb deren Gehäuse realisiert sein. Die Auswerte- und Steuereinheit 202 kann auch aus mehreren, gegebenenfalls verteilt angeordneten Teilkomponenten bestehen. Eine oder mehrere dieser Teilkomponenten können integral mit der Kamera 100 ausgebildet sein und beispielsweise in einem Gehäuse 112 der Kamera vorgesehen sein.

Die Auswerte- und Steuereinheit 202 kann auch mit einer übergeordneten Datenverarbeitungseinheit 212, beispielsweise einem Personal Computer oder einer Netzwerckomponente, über eine Kommunikationsverbindung 214 verbunden sein. Die übergeordnete Einheit kann der Prüfvorrichtung 200 bzw. der Auswerte- und Steuereinheit 202 beispielsweise den Startzeitpunkt übermitteln, wann mit der Inspektion der Produkte 208 begonnen werden soll, und von der Auswerte- und Steuereinheit die Ergebnisse der Inspektion übermittelt erhalten.

Die Auswerte- und Steuereinheit 202 ist so ausgebildet, dass sie in einen Prüfmodus geschaltet werden kann. Dies kann entweder durch das Zuführen eines externen Signals von der übergeordneten Datenverarbeitungseinheit 212 über die Kommunikationsverbindung 214 an die Auswerte- und Steuereinheit 202 erfolgen oder beispielsweise auch mittels des Schalters 202b, mit dem auch gleichzeitig der Zugriff auf den Speicher 202a freigegeben werden kann.

Im Prüfmodus steuert die Auswerte- und Steuereinheit 202 die Kamera 100 so an, dass das von der Kamera 100 gelieferte Bild dahingehend geprüft wird, ob dieses Bild eine ausreichende Qualität zur Erkennung von optischen Strukturen aufweist.

Da bei einer digitalen Kamera bestimmte Parameter eher als unkritisch zu betrachten sind, genügt es in vielen Fällen, den Prüfmodus so auszugestalten, dass lediglich bestimmte kritische Parameter einer Prüfung unterzogen werden.

Bei den unkritischen Parametern handelt es sich häufig um solche Parameter, die entweder kaum einer Langzeitschwankung unterliegen oder die anhand einer einfachen optischen Prüfung durch eine Bedienperson oder durch einfache, beispielsweise mechanische Messungen auf andere Weise leicht und mit geringem Aufwand überprüfbar sind. Solche Parameter sind z. B. die Brennweite oder die Abbildungseigenschaften der Optik der Kamera.

Kritische Parameter der Kamera 100 einer Inspektionsvorrichtung sind dagegen insbesondere Parameter, welche die Graustufenwerte des von der Kamera aufgenommenen Bildes beeinflussen, beispielsweise die Belichtungszeit oder die Empfindlichkeit des digitalen Bildsensors der Kamera 100, d. h. die elektrische Verstärkung des vom digitalen Bildsensor gelieferten elektrischen Bildsignals. Diese Parameter können auf einfache Weise, wie nachstehend erläutert, justiert oder zumindest dahingehend geprüft werden, ob deren Werte so eingestellt sind, dass die Kamera ein Bild mit ausreichender Qualität zur Erkennung der optischen Strukturen liefert. Gleiches gilt auch für die Parameter, welche die Beleuchtungseigenschaften der Beleuchtungseinheit 206 definieren.

Hierzu wird zunächst die Halterung 102 mit der Kamera 100 der Inspektionsvorrichtung 200 verbunden, beispielsweise auf diese aufgesteckt und mit dieser verrastet. Anschließend wird das Prüfnormal 108 in die Aufnahmeöffnung des zweiten Rahmenteils 106 eingesetzt. Selbstverständlich kann sich das Prüfnormal 108 auch dauernd in der Aufnahmeöffnung der Halterung 102 befinden oder fest mit dieser verbunden sein.

Die Halterung 102 ist so ausgebildet, dass das Prüfnormal 108 in einem vorbestimmten korrekten Abstand vor der Kamera 100 (gemessen in der Richtung der optischen Achse der Kamera 100) gehalten ist. Der vorbestimmte korrekte Abstand (Prüfabstand) kann so bestimmt sein, dass sich die der Kamera 100 zugewandte Oberfläche des Prüfnormals 108, auf welcher auszuwertende Prüfinformationen vorgesehen sind, in der Mitte des Schärfentiefebereichs befindet. Der Prüfabstand kann insbesondere dem Sollabstand A entsprechen, mit dem die Objekte 208 im normalen Arbeitsmodus der Inspektionsvorrichtung 200 an dieser vorbeibewegt werden.

Die Inspektionsvorrichtung 200 bzw. die Auswerte- und Steuereinheit 202 kann sich zu diesem Zeitpunkt bereits im Prüfmodus befinden oder erst anschließend in den Prüfmodus versetzt werden, beispielsweise durch Betätigen des Schalters 202b. In einem weiteren Schritt steuert die Auswerte- und Steuereinheit 202 die Kamera 100 so an, dass ein Bild des Prüfnormals 108 aufgenommen wird. Das Bild umfasst zumindest einen relevanten Teilbereich der Informationen, die auf der der Kamera 100 zugewandten Oberfläche des Prüfnormals 108 enthalten sind.

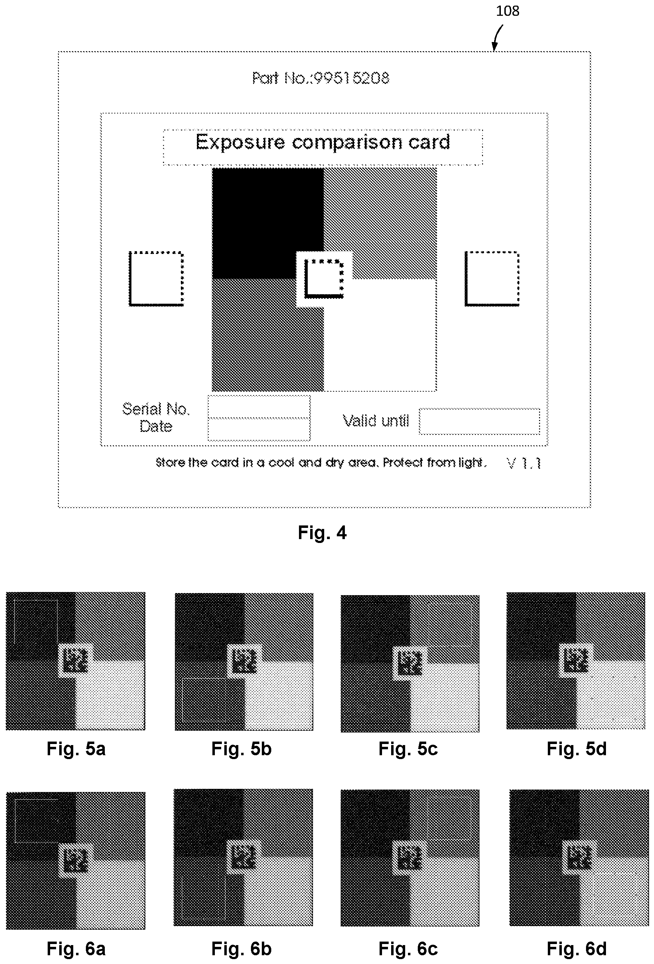

Fig. 4 zeigt schematisch die Prüfinformationen, die auf der der Kamera 100 zugewandten Oberfläche des Prüfnormals 108 vorgesehen sind. Diese Prüfinformationen umfassen insbesondere mehrere, im dargestellten Ausführungsbeispiel vier, im Wesentlichen quadratische Teilflächen, die jeweils unterschiedliche Graudarstellungen beinhalten. Die Graudarstellung der jeweiligen Teilfläche soll dabei ausreichend homogen sein. Um eine Prüfung bzw. Justierung der zu prüfenden und/oder zu justierenden Kamera über den gesamten Graubereich, d. h. von ideal weiß bis ideal schwarz, mit ausreichender Genauigkeit zu ermöglichen, empfiehlt es sich, die Grauwerte der mehreren Graudarstellungen möglichst über den gesamten Graubereich verteilt zu wählen. Hierdurch wird erreicht, dass bei Interpolation ausreichend verteilte Stützstellen für die Grauwerte zur Verfügung stehen. Beispielsweise können, wie in Fig. 4 dargestellt, eine erste Teilfläche einen Grauwert nahe Weiß, eine zweite Teilfläche einen Grauwert nahe Schwarz, eine dritte Teilfläche einen helleren Grauwert und eine vierte Teilfläche einen dunkleren Grauwert aufweisen.

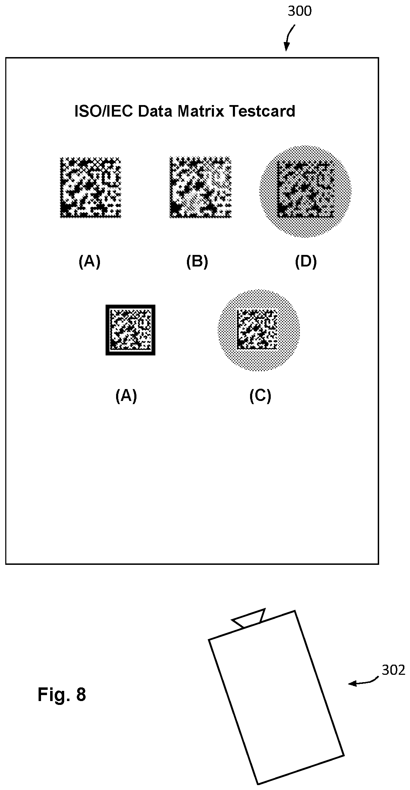

Das Prüfnormal 108 enthält weiterhin Referenz-Grauwerte, die mittels einer Referenzkamera 302 (Fig. 8) bestimmt werden. Die Referenzkamera 302 ist vorzugsweise baugleich mit der Kamera 100, die unter Verwendung des Prüfnormals 108 geprüft bzw. justiert werden soll. Die Referenzkamera 302 wird zuvor optimal justiert. Mit dieser optimalen Einstellung wird ein Bild des Prüfnormals 108 aufgenommen, wozu das Prüfnormal 108 in einem Abstand vor der Referenzkamera 302 gehalten wird, der gleich ist dem Abstand, der sich bei Verwenden der Halterung 102 in Verbindung mit der zu prüfenden bzw. zu justierenden Kamera 100 ergibt. Vorzugsweise kann das Bild des Prüfnormals 108 mittels der Referenzkamera 302 auch unter Verwendung einer baugleichen Halterung 102 aufgenommen werden, oder sogar unter Verwendung derselben Halterung 102, die später für das Prüfen bzw. Justieren der betreffenden Kamera 100 verwendet wird.

Aus dem aufgenommenen Bild des Prüfnormals 108 ermittelt eine Auswerte- und Steuereinheit, welcher die Bilddaten von der Referenzkamera 302 zugeführt werden, zunächst die Positionen der Graudarstellungen des Prüfnormals 108. Innerhalb der Graudarstellungen wählt die Auswerte- und Steuereinheit jeweils innerhalb der einzelnen Teilflächen der Graudarstellungen liegende Teilflächen aus, die zur Ermittlung der Grauwerte verwendet werden. Dies ist in den Fig. 5a bis 5d (diese zeigen jeweils Abbildungen der Graudarstellungen des Prüfnormals 108 gemäß Fig. 4) durch die rechteckigen Rahmen innerhalb der verschiedenen Graudarstellungen angedeutet, wobei die Rahmen diejenigen Teilflächen der Graudarstellungen umschließen, die zur Ermittlung der Grauwerte herangezogen werden. Es kann sich hierbei, wie in Fig. 5 dargestellt, jeweils um quadratische Teilflächen der jeweiligen Graudarstellungen handeln. Die Teilflächen können beispielsweise eine Ausdehnung von 300 × 300 Pixel haben. Aus den Graustufenwerten der einzelnen Pixel kann für die gesamte Teilfläche ein Grauwert berechnet werden, indem der Mittelwert der Graustufenwerte aller Pixel (beispielsweise der 90.000 Pixel bei einer Teilfläche von 300 × 300 Pixel) ermittelt wird.

An dieser Stelle sei darauf hingewiesen, dass der Begriff "Graustufe" in der vorliegenden Beschreibung die möglichen diskreten (gestuften) Grauwerte eines Bildpixels oder eines größeren Bildbereichs bezeichnet, die mit einer bestimmten Anzahl von Bit, beispielsweise 8 Bit, dargestellt werden können. Der niedrigste Grauwert einer Graustufe (schwarz) kann mit 0 und der höchste Grauwert einer Graustufe (weiß) kann mit dem höchstmöglichen Wert, z. B. 255 bei einer 8 Bit Graustufendarstellung, kodiert werden. Der diskrete Wert einer Graustufenskala wird auch als Graustufenwert bezeichnet. Der Oberbegriff "Grauwert" kann sowohl einen (diskreten) Graustufenwert bezeichnen als auch einen beliebigen errechneten (nicht mehr diskreten) Grauwert, beispielsweise einen Mittelwert für eine mehrere Pixel umfassende Fläche und/oder einen Mittelwert für einen oder mehrere (hinsichtlich der Bildposition) bestimmte Pixel eines mehrfach aufgenommenen Bildes.

Tab. 1 zeigt in der oberen Hälfte die Daten, die von der Referenzkamera 302 bei der Bestimmung der Grauwerte verwendet bzw. ermittelt wurden. In der Spalte "Feld" ist mit den Abkürzungen LO, LU, RO, RU jeweils die zur Ermittlung des Grauwertes herangezogene Teilfläche von 300 × 300 Pixel bezeichnet, wobei LO die Teilfläche links oben, LU die Teilfläche links unten, RO die Teilfläche rechts oben und RU die Teilfläche rechts unten bezeichnet. Die Spalte "Area" enthält jeweils die Gesamtzahl der zur Berechnung der Grauwerte herangezogenen Pixel, also 90.000 Pixel. Die Spalten "Mean", "Min" und "Max" bezeichnen jeweils den Mittelwert, das Minimum und das Maximum der Graustufen innerhalb der Teilflächen, wobei der Mittelwert dem ermittelten Grauwert der betreffenden Teilfläche und damit der betreffenden Graudarstellung entspricht.

Für die hellste Teilfläche (RU) mit einem nahe an weiß liegenden Grauwert ergibt sich ein Mittelwert von 211,549 und für die dunkelste Teilfläche (LO) mit einem nahe an schwarz liegenden Grauwert ergibt sich ein Mittelwert von 12,196. Für die Fläche mit dem helleren Grau (RO) ergibt sich ein mittlerer Grauwert von 81,191 und für die Teilfläche mit dem dunkleren Grau ergibt sich ein mittlerer Grauwert von 39,553, wobei in diesem Fall die Kamera 8 Bit Grauwerte liefert.

Diese mittels der Referenzkamera 302 bestimmten Referenz-Grauwerte werden ebenfalls dem Prüfnormal 108 zugeordnet. Diese Information kann beispielsweise in einem Matrixcode im Zentrum der Teilflächen mit den Graudarstellungen enthalten sein. Es ist ebenfalls möglich, diese Information in einem RFID-Chip zu speichern, der in einem kartenartig ausgebildeten Prüfnormal 108 enthalten sein kann. Selbstverständlich kann die Information auch im Klartext auf dem Prüfnormal dargestellt sein.

Das Prüfnormal 108 kann auch, wie in Fig. 4 dargestellt, eine Seriennummer des Prüfnormals, ein Herstellungsdatum und einen Gültigkeitszeitraum als weitere Informationen beinhalten. Das Prüfnormal 108 kann auch einer bestimmten zu prüfenden und/oder zu justierenden Kamera zugeordnet sein. In diesem Fall kann auf dem Prüfnormal auch eine Seriennummer oder eine sonstige Kennung der zu prüfenden und/oder zu justierenden Kamera dargestellt oder dem Prüfnormal auf andere Weise zugeordnet sein.

Mittels eines so beschaffenen Prüfnormals 108, das als ein auf die Referenzkamera 302 rückgeführtes Prüfnormal dient, kann jede weitere baugleiche oder ausreichend bauähnliche Kamera 100 geprüft bzw. kalibriert oder justiert werden. Hierzu wird mittels der zu prüfenden und/oder zu justierenden Kamera 100 ebenfalls ein Bild des Prüfnormals 108 aufgenommen. Selbstverständlich können auch mehrere Bilder aufgenommen und ein "gemitteltes" Bild dadurch ermittelt werden, dass aus den digitalen Bilddaten der mehreren Bilder jeweils ein Mittelwert für einander hinsichtlich der Position entsprechende Pixel (oder auch benachbarte Gruppen von Pixeln) berechnet wird. Hierdurch können insbesondere Rauscheffekte reduziert werden.

Die Aufnahme des Bildes mittels der zu prüfenden und/oder zu justierenden Kamera 100 kann zunächst unter Verwendung einer Ausgangs-Einstellung erfolgen, d. h. relevante Parameter, wie insbesondere die Belichtungszeit und die Empfindlichkeit der Kamera sowie die Helligkeit der Beleuchtung mittels der Beleuchtungseinheit 206, weisen jeweils einen vorgegebenen Ausgangswert auf.

Aus dem aufgenommenen oder berechneten digitalen Bild wird dann in gleicher Weise wie vorstehend in Verbindung mit der Bildauswertung mittels der Referenzkamera 302 erläutert eine Bestimmung der Grauwerte für die Graudarstellungen der einzelnen Teilflächen vorgenommen. Hierzu können möglichst dieselben inneren Teilflächen der einzelnen Graudarstellungen verwendet werden, beispielsweise dadurch, dass jeweils dieselbe quadratische Fläche von beispielsweise 300 × 300 Pixel im Zentrum der quadratischen Gesamt-Teilfläche der betreffenden Graudarstellungen verwendet wird.

Tab. 1 zeigt die Ergebnisse des in den Fig. 6a bis 6d dargestellten Bildes, das mittels einer zu prüfenden und/oder justierenden Kamera 100 aufgenommen wurde, wobei jede der Fig. 6a bis 6d wiederum die jeweils umrahmte auszuwertende quadratische innere Teilfläche für die annähernd schwarze Graudarstellung LO, die dunkler graue Graudarstellung LU, die heller graue Graudarstellung RO und die annähernd weiße Graudarstellung RU zeigen.

Wie die Werte in der unteren Hälfte der Tab. 1 zeigen, liegen die mittels der zu prüfenden und/oder zu justierenden Kamera 100 aufgenommenen Werte im dargestellten Beispielsfall jeweils unter den mittels der Referenzkamera 302 ermittelten Referenz-Grauwerten.

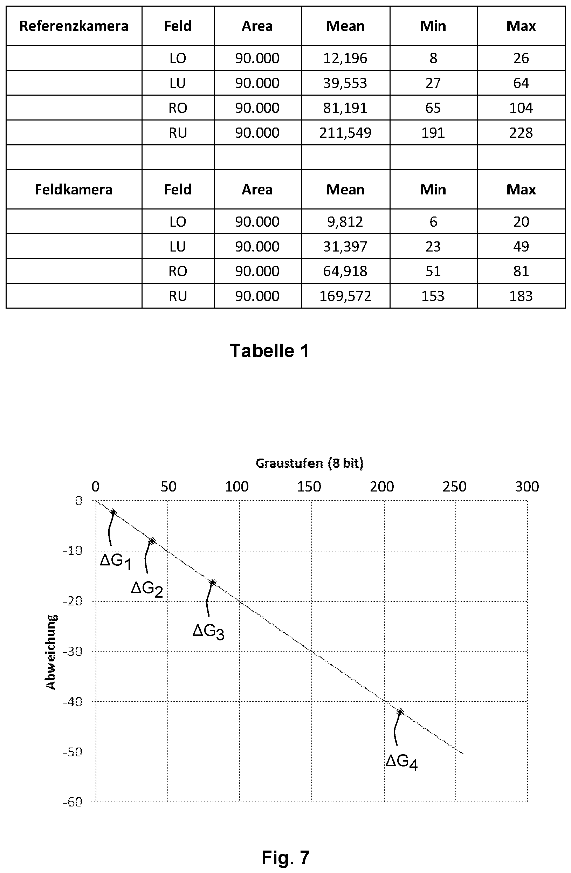

Fig. 7 zeigt eine grafische Darstellung der Abweichungen bzw. Differenzen ΔGᵢ = G_{ist,i} - G_{ref,i} zwischen den für die einzelnen Teilflächen der Graudarstellungen mittels der zu prüfenden und/oder zu justierenden Kamera 100 ermittelten Ist-Grauwerten G_{ist,i} und den mittels der Referenzkamera 302 ermittelten und dem Prüfnormal 108 zugeordneten Referenzgrauwerten G_{ref,i'}. Der Index i bezeichnet dabei die einzelnen Graudarstellungen, wobei mit i=1 die annähernd schwarzen Graudarstellungen, mit i=2 die dunkler grauen Graudarstellungen, mit i=3 die heller grauen Graudarstellungen und mit i=4 die annähernd weißen Graudarstellungen bezeichnet sind. Auf der x-Achse sind Referenzgrauwerte G_{ref,i} im Maßstab der absoluten Grauwerte 0 bis 255 bei einer 8-Bit-Darstellung aufgetragen und auf der y-Achse die Abweichungen ΔGᵢ (ebenfalls in einem linearen Maßstab von 8 Bit Grauwertdifferenzen).

Wie aus Fig. 7 ersichtlich, nimmt die Abweichung ΔGᵢ mit zunehmendem i zu, wobei die Zunahme in der gewählten linearen Darstellung (auf der x-Achse sind die Grauwerte der 255 Graustufen und auf der y-Achse ist die Abweichung ΔGᵢ aufgetragen) annähernd linear ist. Fig. 7 zeigt dabei sowohl die vier diskreten Stützpunkte der Differenz ΔGᵢ (1≤i≤4) als auch eine interpolierte Kurve. Die Interpolation kann abhängig von den gemessenen bzw. ermittelten Stützpunkten beispielsweise als lineare oder als Polynominterpolation einer vorgegebenen Ordnung durchgeführt werden.

Soll die Kamera 100 nur geprüft bzw. kalibriert (im engeren Sinn) werden, so kann die ermittelte maximale Abweichung ΔGᵢ daraufhin geprüft werden, ob diese kleiner ist als eine vorgegebene (zulässige) maximale Abweichung. Ist dies der Fall, so kann die Kamera 100 bzw. die Inspektionsvorrichtung 200, welche die Kamera 100 umfasst, weiter verwendet werden. Ist die maximal zulässige Abweichung überschritten, so kann die Kamera 100 bzw. die betreffende Inspektionsvorrichtung 200 außer Betrieb genommen bzw. aussortiert werden.

Alternativ kann versucht werden, die Kamera 100 bzw. die Inspektionsvorrichtung 200 zu justieren, d. h. eine Einstellung für die relevanten Parameter zu ermitteln, die gewährleistet, dass die vorgegebene maximale Abweichung ΔGᵢ eingehalten wird. Hierzu können beispielsweise in einem iterativen Prozess ein oder mehrere Parameter so variiert werden, wobei nach jedem Variieren eines oder mehrerer Parameter jeweils erneut ein Bild mittels der Kamera 100 aufgenommen wird und dieses Bild erneut in der vorstehend erläuterten Weise daraufhin geprüft wird, ob die vorgegebene maximale Abweichung eingehalten ist.

Das iterative Verfahren kann so lange fortgesetzt werden, bis die zulässige maximale Abweichung ΔGᵢ (das erste Mal) eingehalten ist. Alternativ kann das iterative Verfahren so lange durchgeführt werden, bis eine optimale Einstellung der Kamera 100 erreicht ist, d. h. bis die Abweichung ΔGᵢ ihren minimalen Wert erreicht. Selbstverständlich kann auch ein Abbruchkriterium vorgesehen sein, bei dessen Erreichen das Verfahren abgebrochen wird, auch wenn keine zulässige maximale Abweichung oder eine optimale Einstellung erreicht wurde.

Würde man die maximal zulässige Abweichung ΔGᵢ bei dem zuvor anhand der Fig. 5 bis Fig. 7 und Tab. 1 erläuterten Ausführungsbeispiel auf ΔGᵢ= ±10 festlegen, so könnte beispielsweise die Belichtungszeit erhöht werden. Dies würde zu einer verhältnismäßig helleren Abbildung der helleren Graustufendarstellungen gegenüber den dunkleren Graustufendarstellungen führen, d. h. die in Fig. 7 dargestellte, annähernd lineare Kurve würde nach oben verschoben und der Betrag der negativen Steigung würde abnehmen. Auf diese Weise könnte die vorgegebene zulässige Abweichung von ΔGᵢ= ±10 eingehalten werden.

Ein ähnlicher Effekt könnte auch durch das Anheben der elektrischen Verstärkung der Kamera 100 erreicht werden. Auch durch das Anheben der optischen Leistung der Beleuchtungseinheit 206 der Inspektionsvorrichtung 200 kann ein vergleichbarer Effekt erreicht werden.

Die auf diese Weise ermittelten Werte für die relevanten Parameter, d. h. die betreffende Einstellung der Kamera 100 bzw. der Inspektionsvorrichtung 200, können dann im Speicher 202a gespeichert werden. Die so justierte Kamera 100 bzw. Inspektionsvorrichtung 200 kann dann weiter verwendet werden, wobei im Arbeitsmodus dann eine korrekte Funktion gewährleistet ist.

Statt einem Variieren bestimmter Einstellungsparameter der Kamera 100 bzw. Inspektionsvorrichtung 200 im Rahmen der vorstehend beschriebenen Justierverfahren (Justieren im engeren Sinn) kann auch eine digitale Bildkorrektur vorgenommen werden. Beispielsweise kann nach jedem Schritt eine digitale Korrektur des Bildes vorgenommen und anschließend überprüft werden, ob die Korrektur ausreichend oder optimal war. Falls nicht können weitere Korrekturschritte durchgeführt werden. Die Bildkorrektur kann auch zusätzlich zum Justieren (im engeren Sinn) durchgeführt werden, insbesondere nach dem Abschluss der Justierung im engeren Sinn (auch hier sind ein oder mehrere iterative Korrekturschritte möglich).

Zur Korrektur kann, wie vorstehend beschrieben, erstmalig ein Bild des Prüfnormals 108 aufgenommen werden und aus dem Bild die in Fig. 7 dargestellte Kurve ermittelt werden. Soll die Bildkorrektur zusätzlich zu einer zuvor erfolgten Justierung vorgenommen werden, so kann eine entsprechende Kurve auch aus einem Bild ermittelt werden, welches mit der justierten Einstellung der Kamera 100 bzw. Inspektionsvorrichtung 200 aufgenommen wurde. Die Bildkorrektur kann dann beispielsweise so erfolgen, dass für jeden Graustufenwert ein Korrekturwert ermittelt wird. Der Korrekturwert entspricht der Abweichung ΔG(G) als (diskrete) Funktion des Graustufenwertes G. Mit einer derartigen Bildkorrektur kann das Bild der Kamera 100 weitestgehend so korrigiert werden, dass dieses Bild dem Bild entspricht, das mit der Referenzkamera 302 aufgenommen worden wäre.

Nach dem Abschluss der Prüfung bzw. Justierung der Kamera 100 bzw. der Inspektionsvorrichtung 200 wird der Prüfmodus beendet, beispielsweise durch das erneute Betätigen des Schalters 202b.

Das zuvor beschriebene Prüf- und/oder Justierverfahren (Justierverfahren im weiteren Sinn) kann, wie bereits erwähnt, sowohl im Werk des Herstellers, beispielsweise im Rahmen der Qualitätssicherung bei der Herstellung derartiger Kameras oder entsprechender Vorrichtungen, eingesetzt werden oder auch im Feld zur Überprüfung bereits ausgelieferter Kameras. Die Überprüfung bzw. Justierung kann dabei auch vom Anwender selbst vorgenommen werden.

Abschließend soll noch beschrieben werden, wie die zuvor erwähnte optimale Einstellung der Referenzkamera 302 erfolgen kann. Selbstverständlich kann die Referenzkamera 302 auch Bestandteil einer Referenz-Inspektionsvorrichtung sein.

Als Mittel zur Bestimmung der optimalen Einstellung der Referenzkamera 302 bzw. der Referenz-Inspektionsvorrichtung kann ein in Fig. 8 schematisch dargestelltes Urnormal 300 verwendet werden, das beispielsweise von staatlichen Behörden oder autorisierten (akkreditierten) Unternehmen hergestellt werden kann. Das Urnormal 300 kann so ausgebildet sein, dass mit diesem nicht nur die mittels des hier geschilderten Verfahrens zu prüfenden bzw. zu justierenden Parameter, sondern zusätzlich weitere Parameter oder Eigenschaften der Kamera 100 geprüft und/oder justiert werden können. Hierbei handelt es sich insbesondere auch um Parameter, welche eine ausreichend scharfe Abbildung in einem vorgegebenen Schärfentiefebereich beeinflussen.

Fig. 8 zeigt ein Urnormal 300, welches zur Prüfung und/oder Justierung von Inspektionsvorrichtungen zum Erfassen von optischen Codes geeignet ist. Das Urnormal 300 weist hierzu Darstellungen von optischen Codes (im dargestellten Ausführungsbeispiel optische Darstellungen von Matrixcodes) auf, die sich hinsichtlich der Darstellungsqualität unterscheiden. Wie bereits vorstehend erläutert, existieren hier bestimmte Standards, beispielsweise in Form der Norm ISO/IEC 15416 für Strichcodes und der Norm ISO/IEC 15415 für Matrixcodes. In diesen Standards werden die Eigenschaften bestimmter Qualitätsstufen oder Gradingstufen (A, B, C, D, F) anhand von verschiedenen Parametern (zum Beispiel Symbol Kontrast, minimaler Kantenkontrast, Modulation etc.) definiert.

Bei der in Fig. 8 dargestellten Ausführungsform eines Urnormals 300 sind als Prüfinformationen fünf verschiedene Darstellungen von Matrixcodes mit unterschiedlichen Qualitätsstufen vorgesehen. Die Qualitätsstufen A bis D (von möglichen Stufen A bis F) sind jeweils in Klammern unterhalb der betreffenden Darstellung eines Codes angegeben. Auf die zusätzliche Darstellung der Werte der einzelnen Parameter, aus welchen die Qualitätsstufe der betreffenden Codedarstellung ermittelt wurde, wurde in der schematischen Darstellung eines Urnormals 300 gemäß Fig. 4 verzichtet. Diese können jedoch ebenfalls angegeben sein, um bei der Überprüfung einer Kamera mit dem Urnormal 300 nicht nur überprüfen zu können, ob bei der Auswertung des von der Kamera gelieferten Bildes die Qualitätsstufen der einzelnen Codedarstellungen korrekt ermittelt werden, sondern bei Abweichungen in der ermittelten Qualitätsstufe auch feststellen zu können, welcher der einzelnen Parameterwerte, die aus dem Kamerabild bestimmt wurden, nicht genau genug mit dem auf dem Urnormal 300 angegebenen Wert für die betreffende Codedarstellung übereinstimmt.

Dieses Urnormal 300 wird verwendet, um die optimale Einstellung einer Referenzkamera 302 bzw. einer entsprechenden Referenz-Inspektionsvorrichtung zu ermitteln. Hierzu wird unter Verwendung einer definierten Beleuchtung und einer vorgegebenen Einstellung für die Blende (Blendenwert) mittels der Referenzkamera 302 ein Bild der auf dem Urnormal vorgesehenen Prüfinformationen aufgenommen. Der Abstand zwischen dem Urnormal und der Referenzkamera 302 wird in Bezug auf den gewählten Blendenwert so gewählt, dass eine scharfe Abbildung der Oberfläche bzw. der Prüfinformationen des Urnormals gewährleistet ist. Der Abstand zwischen der Oberfläche des Urnormals und der Referenzkamera 302 entspricht dabei dem Abstand, der durch die Halterung 102 zwischen der Kamera 100 (bzw. der Referenzkamera 302) und dem Prüfnormal 108 beim Herstellen einer Aufnahme des Prüfnormals 108 festgelegt ist. Die Belichtungszeit der Referenzkamera 302 wird abhängig von der gewählten Beleuchtung und weiteren Einstellungswerten, insbesondere für die Blende, so gewählt, dass sich ein möglichst optimales Bild ergibt. Die so ermittelte optimale Einstellung der Referenzkamera 302 wird dann auch verwendet, um ein Bild des Prüfnormals 108 mittels der Referenzkamera 302 aufzunehmen und die entsprechenden Referenz-Grauwerte des Prüfnormals 108 zu bestimmen.

Bei dem vereinfachten Prüf- und/oder Justierverfahren nach der Erfindung, bei dem ein Prüfnormal 108 mit den vorstehend beschriebenen Merkmalen verwendet wird, kann davon ausgegangen werden, dass eine mit diesem Verfahren geprüfte bzw. justierte und für gut befundene Kamera (und damit auch eine die Kamera umfassende Inspektionsvorrichtung) auch in der Lage ist, die optischen Strukturen korrekt zu erkennen, die in einem Arbeitsmodus der Kamera erkannt werden sollen. Zwar gewährleistet das erfindungsgemäße vereinfachte Prüf- und/oder Justierverfahren nur eine Prüfung der Abbildungseigenschaften der Kamera hinsichtlich der Grauwerte eines von der Kamera gelieferten Bildes in Bezug auf die entsprechenden Eigenschaften einer Referenzkamera, jedoch kann davon ausgegangen werden, dass in der Praxis die übrigen Darstellungseigenschaften bzw. Parameter der Kamera einfach auf andere Weise geprüft werden können oder kaum im Verlauf der Lebensdauer der Kamera variieren, so dass eine Überprüfung nicht erforderlich ist und von der Korrektheit der Einstellung dieser Parameter ausgegangen werden kann. Abschließend sei nochmals darauf hingewiesen, dass das erfindungsgemäße Verfahren nicht nur auf Kameras bzw. Inspektionsvorrichtungen zur Erkennung von optischen Codes beschränkt ist, sondern sich in gleicher Weise auch auf andere optische Erkennungsaufgaben bzw. -vorrichtungen anwenden lässt. Beispielsweise kann mit der Erfindung auch eine Kamera bzw. Inspektionsvorrichtung zur Erkennung von optischen Strukturen bei der Prüfung der optischen Beschaffenheit von Bauteilen oder eine Kamera bzw. Inspektionsvorrichtung zur Prüfung der Vollständigkeit der Bestückung von Leiterplatten geprüft und/oder justiert werden. Auch für Kameras in anderen Anwendungen, beispielsweise Kameras für KFZ-Anwendungen (Kameras für Spurassistenten sowie Kameras für autonomes Fahren etc.) kann die Erfindung zur Anwendung kommen, beispielsweise im Rahmen von turnusmäßigen Prüfungen.

### Bezugszeichenliste:

- 100: Kamera
- 102: Halterung
- 104: erstes Rahmenteil
- 105: Verbindungsstrebe
- 106: zweites Rahmenteil
- 108: Prüfnormal
- 110: Fortsatz
- 112: Gehäuse

- 200: optische Inspektionsvorrichtung
- 202: Auswerte- und Steuereinheit
- 202a: Speicher
- 202b: Schalter
- 204: Kommunikationsverbindung
- 206: Beleuchtungseinheit
- 208: Objekt
- 210: Kommunikationsverbindung
- 212: übergeordnete Datenverarbeitungseinheit
- 214: Kommunikationsverbindung

- 300: Urnormal
- 302: Referenzkamera

## Patentansprüche

1. Verfahren zum Prüfen und/oder Justieren einer Kamera, insbesondere einer digitalen Kamera, **gekennzeichnet durch** folgende Schritte:
(a) Erstellung eines optischen Prüfnormals (108), durch
(i) Herstellen eines vorzugsweise platten- oder kartenförmigen Trägers für das optische Prüfnormal (108) derart, dass auf einer Oberfläche des Trägers oder in den Träger zumindest teilweise eingebettet mehrere Teilflächen mit jeweils unterschiedlichen Graudarstellungen vorgesehen sind, oder Verwenden eines solchen Trägers für die weiteren Schritte;
(ii) Aufnehmen wenigstens eines Referenzbildes der Oberfläche des Trägers oder eines Referenzbildes bei Durchstrahlung des Trägers zumindest im Bereich der Teilflächen mittels einer Referenzkamera (302), wobei das Aufnehmen des wenigstens einen Referenzbildes mit einer vorgegebenen, wenigstens einen Parameter umfassenden Einstellung der Referenzkamera (302) vorgenommen wird;
(iii) Bestimmen von Referenz-Grauwerten für die Teilflächen aus dem Referenzbild und Zuordnen der Referenz-Grauwerte zu dem Träger; und
(iv) Zuordnen der Referenz-Grauwerte zu dem Träger durch Aufbringen der Daten auf den Träger in optisch lesbarer Form und/oder Speichern der Referenz-Grauwerte in einem im oder auf dem Träger vorgesehenen Speicher
(b) Aufnehmen wenigstens eines Bildes des optischen Prüfnormals (108) mit der zu prüfenden und/oder zu justierenden Kamera (100), wobei das Aufnehmen des wenigstens einen Bildes mit einer vorgegebenen, wenigstens einen Parameter umfassenden Einstellung der zu prüfenden und/oder zu justierenden Kamera (100) vorgenommen wird, und Ermitteln von Ist-Grauwerten für die Teilflächen aus dem wenigstens einen Bild;
(c) Treffen einer Aussage über eine genügende oder ungenügende Justierung der zu prüfenden und/oder zu justierenden Kamera (100) abhängig von einem Vergleich der Ist-Grauwerte mit den Referenz-Grauwerten oder mit einem vorgegebenen Wertebereich für zulässige Ist-Grauwerte.

2. Verfahren nach Anspruch 1, **dadurch gekennzeichnet, dass** der wenigstens eine Parameter der Einstellung der zu prüfenden und/oder zu justierenden Kamera (100), beispielsweise die Belichtungszeit und/oder die Empfindlichkeit, so variiert wird, dass bei Aufnehmen wenigstens eines weiteren Bildes des optischen Prüfnormals (108) die aus dem wenigstens einen weiteren Bild ermittelten Ist-Grauwerte für die Teilflächen möglichst nahe an den Referenz-Grauwerten liegen.

3. Verfahren nach Anspruch 1 oder 2, **dadurch gekennzeichnet, dass** die zu prüfende und/oder zu justierende Kamera (100) als ausreichend justiert erkannt wird, wenn eine Abweichung der Ist-Grauwerte von den Referenz-Grauwerten innerhalb eines vorgegeben zulässigen Bereichs liegt und/oder, dass die zu prüfende und/oder zu justierende Kamera (100) als fehlerhaft justiert erkannt wird, wenn die Abweichung der Ist-Grauwerte von den Referenz-Grauwerten außerhalb des zulässigen Bereichs liegt.

4. Verfahren nach Anspruch 1, **dadurch gekennzeichnet, dass** der wenigstens eine Parameter der Einstellung der zu prüfenden und/oder zu justierenden Kamera (100), beispielsweise die Belichtungszeit und/oder die Empfindlichkeit, so variiert wird, dass bei Aufnehmen wenigstens eines weiteren Bildes des optischen Prüfnormals (108) die aus dem wenigstens einen weiteren Bild ermittelten Ist-Grauwerte für die Teilflächen jeweils innerhalb eines vorgegebenen Wertebereichs für zulässige Ist-Grauwerte liegen oder eine Abweichung der Ist-Grauwerte von den Referenz-Grauwerten innerhalb eines vorgegebenen zulässigen Bereichs liegt, wobei die zu prüfende und/oder zu justierende Kamera (100) in diesem Fall als ausreichend justiert erkannt wird.

5. Verfahren nach einem der Ansprüche 2 bis 4, **dadurch gekennzeichnet, dass** der zu prüfenden und/oder zu justierenden Kamera (100) eine den wenigstens einen Parameter umfassende Justiereinstellung zugeordnet wird, welche den Wert des wenigstens einen variierten Parameters umfasst und für welche die zu prüfende und/oder zu justierende Kamera (100) als ausreichend justiert erkannt wurde.

6. Verfahren nach einem der vorhergehenden Ansprüche, **dadurch gekennzeichnet, dass** aus einem Vergleich der Ist-Grauwerte und der Referenz-Grauwerte eine Aussage getroffen wird, ob die zu prüfende und/oder zu justierenden Kamera (100) mit der Einstellung, mit welcher die Ist-Grauwerte ermittelt wurden, mit ausreichender Qualität korrigierbare Bilder liefert, und, wenn ja, dass aus den Ist-Grauwerten und den Referenz-Grauwerten ein Korrekturoperator, vorzugsweise ein Punktoperator, zur Korrektur der Grauwerte von Bildern ermittelt wird, welche von der Kamera (100) in einem Arbeitsmodus geliefert werden.

7. Verfahren nach Anspruch 6, **dadurch gekennzeichnet, dass** der Korrekturoperator durch Interpolation unter Verwendung der Ist-Grauwerte und der Referenz-Grauwerte bestimmt wird, wobei insbesondere jeder möglichen Graustufe für die Referenz-Grauwerte ein Korrekturwert des Korrekturoperators zugeordnet wird.

8. Verfahren nach einem der vorhergehenden Ansprüche, **dadurch gekennzeichnet, dass** die Referenzkamera (302) Bestandteil einer Referenz-Inspektionsvorrichtung zum Prüfen von optischen Strukturen ist, und dass die zu prüfende und/oder zu justierende Kamera (100) Bestandteil einer zu prüfenden und/oder zu justierenden Inspektionsvorrichtung (200) zum Prüfen von optischen Strukturen ist.

9. Verfahren nach einem der vorhergehenden Ansprüche, **dadurch gekennzeichnet, dass** die Einstellung der Referenzkamera (302) unter Verwendung eines optischen Urnormals (300) erfolgt, auf welchem mehrere optische Strukturen vorgesehen sind, die jeweils eine zugeordnete Abbildungsqualitätsstufe aufweisen, wobei die optischen Strukturen beispielsweise optische Codes, insbesondere Strichcodes oder Matrixcodes, sind, und wobei die Einstellung der Referenz-Kamera (302) so ermittelt wird, dass aus einem mit dieser Einstellung aufgenommenen Bild des optischen Urnormals (300) den optischen Strukturen die korrekte Qualitätsstufe zugeordnet wird.

10. Verfahren nach einem der vorhergehenden Ansprüche, **dadurch gekennzeichnet, dass** die Schritte (b) und (c) des Anspruchs 1 zur Prüfung und/oder Justierung der zu prüfenden und/oder zu justierenden Kamera (100) herstellerseitig oder anwenderseitig durchgeführt werden.

11. Optische Inspektionsvorrichtung zum Prüfen und/oder Erkennen von optischen Strukturen, insbesondere von optischen Codes,
(a) mit einer Kamera (100) und einer Auswerte- und Steuereinheit (202), welcher das von der Kamera (100) erzeugte Bildsignal oder von dieser erzeugte digitale Bilddaten zugeführt werden,
**dadurch gekennzeichnet,**
(b) **dass** die Auswerte- und Steuereinheit (202) so ausgebildet ist, dass sie in einen Prüfmodus überführbar ist,
(i) in welchem die Auswerte- und Steuereinheit (202) die Kamera (100) so ansteuert, dass wenigstens ein Bild eines mehrere Teilflächen mit jeweils unterschiedlichen Graudarstellungen aufweisenden optischen Prüfnormals (108) mit einer vorgegebenen, wenigstens einen Parameter umfassenden Einstellung der Kamera (100) aufgenommen wird,
(ii) in welchem die Auswerte- und Steuereinheit (202) aus dem ihr zugeführten Bildsignal oder den digitalen Bilddaten des wenigstens einen Bildes Ist-Grauwerte für die Teilflächen aus dem wenigstens einen Bild ermittelt, und
(iii) in welchem die Auswerte- und Steuereinheit (202) die Ist-Grauwerte mit gespeicherten oder ihr zugeführten Referenz-Grauwerten oder mit gespeicherten oder ihr zugeführten Wertebereichen für zulässige Ist-Grauwerte zum Treffen einer Aussage über eine genügende oder ungenügende Justierung der Kamera (100) vergleicht,
(iv) wobei diese Daten auf einem Träger des Prüfnormals (109) in optisch lesbarer Form aufgebracht sind und/oder in einem im oder auf dem Träger vorgesehenen Speicher gespeichert sind.

12. Optische Inspektionsvorrichtung nach Anspruch 11, **dadurch gekennzeichnet, dass** die Auswerte- und Steuereinheit (202) so ausgebildet ist, dass sie im Prüfmodus die Verfahren nach den Ansprüchen 2 bis 4 selbsttätig ausführt oder diese Verfahren durch Eingriffe einer Bedienperson zumindest teilweise manuell ausführbar sind.

13. Optische Inspektionsvorrichtung nach Anspruch 11 oder 12, **dadurch gekennzeichnet, dass** eine mit der Inspektionsvorrichtung (200) zur Durchführung des Verfahrens zum Prüfen und/oder Justieren mit der Inspektionsvorrichtung (200) verbindbare, vorzugsweise aufsteckbare, oder permanent mit ihr verbundene Haltevorrichtung (102) für das optische Prüfnormal (108) vorgesehen ist, und dass die Haltevorrichtung (102) so ausgebildet ist, dass das optische Prüfnormal (108) in einem definierten Abstand zur Kamera (100) gehalten wird.

14. Optische Inspektionsvorrichtung nach Anspruch 13, **dadurch gekennzeichnet, dass** die Haltevorrichtung (102) so ausgebildet ist, dass das optische Prüfnormal (108), welches vorzugsweise plattenartig oder kartenartig ausgebildet ist, in einer definierten Position in einer Ebene im Wesentlichen senkrecht zur optischen Achse der Kamera (100) gehalten ist, wobei das optische Prüfnormal (108) vorzugsweise in die Haltevorrichtung (102) einsetzbar und aus dieser entnehmbar ist.

15. Verfahren zur Herstellung eines optischen Prüfnormals zum Prüfen und/oder Justieren einer Kamera, insbesondere einer digitalen Kamera, **gekennzeichnet durch** folgende Schritte:
(a) Herstellen eines Trägers für das optische Prüfnormal (108) derart, dass auf einer Oberfläche des Trägers oder in den Träger zumindest teilweise eingebettet mehrere Teilflächen mit jeweils unterschiedlichen Graudarstellungen vorgesehen sind, oder Verwenden eines solchen Trägers für die weiteren Schritte;
(b) Aufnehmen wenigstens eines Referenzbildes des Trägers mittels einer Referenzkamera (302), wobei das Aufnehmen des wenigstens einen Referenzbildes mit einer vorgegebenen, wenigstens einen Parameter umfassenden Einstellung der Referenzkamera (302) vorgenommen wird; und
(c) Bestimmen von Referenz-Grauwerten für die Teilflächen aus dem Referenzbild und Zuordnen der Referenz-Grauwerte zu dem Träger durch Aufbringen der Daten auf den Träger in optisch lesbarer Form und/oder Speichern der Referenz-Grauwerte in einem im oder auf dem Träger vorgesehenen Speicher.

16. Verfahren nach Anspruch 15, **dadurch gekennzeichnet, dass** dem Träger weitere Informationen und/oder Daten zugeordnet werden, insbesondere ein Herstellungsdatum, ein die Gültigkeit des optischen Prüfnormals (108) definierendes Enddatum, eine Nutzungszeitspanne, eine Seriennummer des optischen Prüfnormals, eine Seriennummer und/oder eine Typinformation der zu prüfenden und/oder zu justierenden Kamera (100) und/oder eine Seriennummer und/oder eine Typinformation der Referenzkamera (300).

17. Verfahren nach einem der Ansprüche 15 oder 16, **dadurch gekennzeichnet, dass** die Einstellung der Referenzkamera (302) unter Verwendung eines optischen Urnormals (300) erfolgt, auf welchem mehrere optische Strukturen vorgesehen sind, die jeweils eine zugeordnete Abbildungsqualitätsstufe aufweisen, wobei die optischen Strukturen beispielsweise optische Codes, insbesondere Strichcodes oder Matrixcodes, sind, und wobei die Einstellung der Referenz-Kamera (302) so ermittelt wird, dass aus einem mit dieser Einstellung aufgenommenen Bild des optischen Urnormals (300) den optischen Strukturen die korrekte Qualitätsstufe zugeordnet wird.

## Claims

1. Method for testing and/or adjusting a camera, in particular a digital camera, **characterized by** the following steps:
(a) creating an optical test standard (108), by
(i) producing a preferably plate-like or card-like substrate for the optical test standard (108) such that a plurality of subareas, each having different gray-scale representations, are provided on a surface of the substrate or so as to be at least partially embedded in the substrate, or using such a substrate for the further steps;
(ii) capturing at least one reference image of the surface of the substrate, or a reference image when the substrate is irradiated, at least in the region of the subareas, by means of a reference camera (302), the at least one reference image being captured using a specified setting of the reference camera (302), which setting includes at least one parameter;
(iii) determining reference gray-scale values for the subareas from the reference image and assigning the reference gray-scale values to the substrate; and
(iv) assigning the reference gray-scale values to the substrate by applying the data to the substrate in an optically readable form and/or storing the reference gray-scale values in a memory provided in or on the substrate;
(b) capturing at least one image of the optical test standard (108) using the camera (100) to be tested and/or adjusted, the at least one image being captured using a specified setting of the camera to be tested and/or adjusted, which setting includes at least one parameter (100), and determining actual gray-scale values for the subareas from the at least one image; and
(c) according to a comparison of the actual gray-scale values with the reference gray-scale values or with a specified value range for permissible actual gray-scale values, drawing a conclusion regarding sufficient or insufficient adjustment of the camera (100) to be tested and/or adjusted.

2. Method according to claim 1, **characterized in that** the at least one parameter of the setting of the camera (100) to be tested and/or adjusted, for example the exposure time and/or the sensitivity, is varied such that when capturing at least one further image of the optical test standard (108), the actual gray-scale values for the subareas, which values are determined from the at least one further image, are as close as possible to the reference gray-scale values.

3. Method according to either claim 1 or claim 2, **characterized in that** the camera (100) to be tested and/or adjusted is recognized as being sufficiently adjusted if a deviation of the actual gray-scale values from the reference gray-scale values is within a specified permissible range, and/or **in that** the camera (100) to be tested and/or adjusted is recognized as being incorrectly adjusted if the deviation of the actual gray-scale values from the reference gray-scale values is outside the permissible range.

4. Method according to claim 1, **characterized in that** the at least one parameter of the setting of the camera (100) to be tested and/or adjusted, for example the exposure time and/or the sensitivity, is varied such that when capturing at least one further image of the optical test standard (108), the actual gray-scale values for the subareas, which values are determined from the at least one further image, are each within a specified value range for permissible actual gray-scale values, or a deviation of the actual gray-scale values from the reference gray-scale values is within a specified permissible range, the camera (100) to be tested and/or adjusted being recognized as being sufficiently adjusted in this case.

5. Method according to any of claims 2 to 4, **characterized in that** the camera (100) to be tested and/or adjusted is assigned an adjustment setting including the at least one parameter, which setting includes the value of the at least one varied parameter, and for which setting the camera (100) to be tested and/or adjusted has been recognized as being sufficiently adjusted.

6. Method according to any of the preceding claims, **characterized in that** a conclusion is drawn from a comparison of the actual gray-scale values and the reference gray-scale values as to whether the camera (100) to be tested and/or adjusted supplies correctable images having sufficient quality using the setting with which the actual gray-scale values have been determined and, if so, **in that** a correction operator, preferably a point operator, for correcting the gray-scale values of images which are supplied by the camera (100) in a working mode is determined from the actual gray-scale values and the reference gray-scale values.

7. Method according to claim 6, **characterized in that** the correction operator is determined by interpolation using the actual gray-scale values and the reference gray-scale values, each possible gray level for the reference gray-scale values being assigned in particular a correction value of the correction operator.

8. Method according to any of the preceding claims, **characterized in that** the reference camera (302) is part of a reference inspection device for testing optical structures, and **in that** the camera (100) to be tested and/or adjusted is part of an inspection device (200) to be tested and/or adjusted for testing optical structures.

9. Method according to any of the preceding claims, **characterized in that** the reference camera (302) is set using a primary optical standard (300) on which a plurality of optical structures are provided, each having an assigned imaging quality level, the optical structures being, for example, optical codes, in particular bar codes or matrix codes, and the setting of the reference camera (302) being determined such that the optical structures are assigned the correct quality level from an image of the primary optical standard (300) captured using this setting.

10. Method according to any of the preceding claims, **characterized in that** steps (b) and (c) of claim 1 for testing and/or adjusting the camera (100) to be tested and/or adjusted are carried out by the manufacturer or by the user.

11. Optical inspection device for testing and/or detecting optical structures, in particular optical codes,
(a) comprising a camera (100) and an evaluation and control unit (202) to which the image signal generated by the camera (100) or digital image data generated by said camera is supplied,
**characterized in that**
(b) the evaluation and control unit (202) is designed such that it can be switched to a test mode,
(i) in which the evaluation and control unit (202) controls the camera (100) in such a way that at least one image of an optical test standard (108) which has a plurality of subareas each having different gray-scale representations is captured using a specified setting of the camera (100), which setting includes at least one parameter,
(ii) in which the evaluation and control unit (202) determines, from the image signal supplied thereto or from the digital image data of the at least one image, actual gray-scale values for the subareas from the at least one image, and
(iii) in which the evaluation and control unit (202) compares the actual gray-scale values with reference gray-scale values that are stored or supplied to said unit or with value ranges for permissible actual gray-scale values that are stored or supplied to said unit, in order to draw a conclusion regarding sufficient or insufficient adjustment of the camera (100),
(iv) this data being applied to a substrate of the test standard (109) in an optically readable form and/or being stored in a memory provided in or on the substrate.

12. Optical inspection device according to claim 11, **characterized in that** the evaluation and control unit (202) is designed such that it automatically carries out the methods according to claims 2 to 4 in the test mode or these methods can be carried out at least partially manually by means of interventions by an operator.

13. Optical inspection device according to either claim 11 or claim 12, **characterized in that** a holding device (102) for the optical test standard (108) is provided, which device is connectable to, preferably pluggable onto, or permanently connected to, the inspection device (200) for carrying out the method for testing and/or adjusting with the inspection device (200), and **in that** the holding device (102) is designed such that the optical test standard (108) is held at a defined distance from the camera (100).

14. Optical inspection device according to claim 13, **characterized in that** the holding device (102) is designed such that the optical test standard (108), which is preferably plate-like or card-like, is held in a defined position in a plane substantially perpendicularly to the optical axis of the camera (100), the optical test standard (108) preferably being insertable into and removable from the holding device (102).

15. Method for producing an optical test standard for testing and/or adjusting a camera, in particular a digital camera, **characterized by** the following steps:
(a) producing a substrate for the optical test standard (108) in such a way that a plurality of subareas, each having different gray-scale representations, are provided on a surface of the substrate or so as to be at least partially embedded in the substrate, or using such a substrate for the further steps;
(b) capturing at least one reference image of the substrate by means of a reference camera (302), the at least one reference image being captured using a specified setting of the reference camera (302), which setting includes at least one parameter; and
(c) determining reference gray-scale values for the subareas from the reference image and assigning the reference gray-scale values to the substrate by applying the data to the substrate in an optically readable form and/or storing the reference gray-scale values in a memory provided in or on the substrate.

16. Method according to claim 15, **characterized in that** the substrate is assigned further information and/or data, in particular a manufacturing date, an end date defining the validity of the optical test standard (108), a period of use, a serial number of the optical test standard, a serial number and/or type information of the camera (100) to be tested and/or adjusted and/or a serial number and/or type information of the reference camera (300).

17. Method according to either claim 15 or claim 16, **characterized in that** the reference camera (302) is set using a primary optical standard (300) on which a plurality of optical structures are provided, each of which has an assigned imaging quality level, the optical structures being, for example, optical codes, in particular bar codes or matrix codes, and the setting of the reference camera (302) being determined such that the optical structures are assigned the correct quality level from an image of the primary optical standard (300) captured using this setting.

## Revendications

1. Procédé permettant de vérifier et/ou d'ajuster une caméra, en particulier une caméra numérique, **caractérisé par** les étapes suivantes :
(a) Création d'un étalon de test optique (108), par
(i) la création d'un support, de préférence en forme de plaque ou de carte, pour l'étalon de test optique (108) conçu de sorte que plusieurs zones partielles, dont chacune des représentations de gris est différente, sont prévues sur une surface du support ou au moins partiellement intégrées dans le support, ou l'utilisation d'un tel support pour les étapes ultérieures ;
(ii) l'enregistrement d'au moins une image de référence de la surface du support ou d'une image de référence lorsque le support est exposé à un rayonnement, au moins dans la région des zones partielles, à l'aide d'une caméra de référence (302), l'enregistrement de l'au moins une image de référence étant effectué avec un réglage prédéterminé de la caméra de référence (302) qui comprend au moins un paramètre ;
(iii) la détermination de valeurs de gris de référence pour les zones partielles à partir de l'image de référence et l'attribution des valeurs de gris de référence au support ; et
(iv) l'attribution des valeurs de gris de référence au support en appliquant les données au support sous une forme optiquement lisible et/ou le stockage des valeurs de gris de référence dans une mémoire prévue dans le support ou sur ce dernier.
(b) Enregistrement d'au moins une image de l'étalon de test optique (108) avec la caméra (100) à vérifier et/ou à ajuster, l'enregistrement de l'au moins une image étant effectué avec un réglage prédéterminé de la caméra à vérifier et/ou à ajuster comprenant au moins un paramètre (100), et détermination des valeurs de gris réelles pour les zones partielles à partir de l'au moins une image ;
(c) Déclaration à propos d'un ajustage suffisant ou insuffisant de la caméra (100) à vérifier et/ou à ajuster en fonction d'une comparaison entre les valeurs de gris réelles et les valeurs de gris de référence ou une plage de valeurs prédéterminée pour les valeurs de gris réelles admissibles.

2. Procédé selon la revendication 1, **caractérisé en ce que** l'au moins un paramètre du réglage de la caméra (100) à vérifier et/ou à ajuster, par exemple le temps d'exposition et/ou la sensibilité, est modifié de telle sorte que lors de l'enregistrement d'au moins une autre image de l'étalon de test optique (108), les valeurs de gris réelles déterminées à partir de l'au moins une autre image pour les zones partielles sont aussi proches que possible des valeurs de gris de référence.

3. Procédé selon la revendication 1 ou 2, **caractérisé en ce que** la caméra (100) à vérifier et/ou à ajuster est reconnue comme étant suffisamment ajustée si un écart entre les valeurs de gris réelles et les valeurs de gris de référence se situe dans une plage prédéterminée admissible et/ou **en ce que** la caméra (100) à vérifier et/ou à ajuster est reconnue comme mal ajustée si l'écart entre valeurs de gris réelles et les valeurs de gris de référence se situe en dehors de la plage admissible.

4. Procédé selon la revendication 1, **caractérisé en ce que** l'au moins un paramètre du réglage de la caméra (100) à vérifier et/ou à ajuster, par exemple le temps d'exposition et/ou la sensibilité, est modifié de telle sorte que lors de l'enregistrement d'au moins une autre image de l'étalon de test optique (108), les valeurs de gris réelles déterminées à partir de l'au moins une autre image pour les zones partielles se situent chacune dans une plage de valeurs prédéterminée pour des valeurs de gris réelles admissibles ou un écart entre les valeurs de gris réelles et les valeurs de gris de référence se situe dans une plage prédéterminée admissible, la caméra (100) à vérifier et/ou à ajuster étant dans ce cas reconnue comme suffisamment ajustée.

5. Procédé selon l'une des revendications 2 à 4, **caractérisé en ce que** la caméra (100) à vérifier et/ou à ajuster est associée à un réglage d'ajustage qui comprend l'au moins un paramètre, qui comprend la valeur de l'au moins un paramètre modifié et pour lequel la caméra (100) à vérifier et/ou à ajuster a été reconnue comme suffisamment ajustée.

6. Procédé selon l'une des revendications précédentes, **caractérisé en ce qu'**on détermine, à partir d'une comparaison entre les valeurs de gris réelles et les valeurs de gris de référence, si la caméra (100) à vérifier et/ou à ajuster, avec le réglage avec lequel les valeurs de gris réelles ont été déterminées, fournit des images corrigibles d'une qualité suffisante et, si oui, **en ce qu'**un opérateur de correction, de préférence un opérateur ponctuel, est déterminé à partir des valeurs de gris réelles et des valeurs de gris de référence pour corriger les valeurs de gris des images que la caméra (100) fournit dans un mode de travail.

7. Procédé selon la revendication 6, **caractérisé en ce que** l'opérateur de correction est déterminé par interpolation au moyen des valeurs de gris réelles et des valeurs de gris de référence, une valeur de correction de l'opérateur de correction étant associée en particulier à chaque niveau de gris possible pour les valeurs de gris de référence.

8. Procédé selon l'une des revendications précédentes, **caractérisé en ce que** la caméra de référence (302) fait partie d'un dispositif d'inspection de référence destiné à vérifier des structures optiques, et **en ce que** la caméra (100) à vérifier et/ou à ajuster fait partie d'un dispositif d'inspection à vérifier et/ou à ajuster (200) destiné à vérifier des structures optiques.

9. Procédé selon l'une des revendications précédentes, **caractérisé en ce que** la caméra de référence (302) est réglée à l'aide d'un étalon optique d'origine (300) sur lequel sont prévues plusieurs structures optiques ayant chacune un niveau de qualité d'image associé, les structures optiques étant par exemple des codes optiques, en particulier des codes-barres ou des codes matriciels, et le réglage de la caméra de référence (302) étant déterminé de sorte que le bon niveau de qualité soit attribué aux structures optiques à partir d'une image de l'étalon optique d'origine (300) enregistrée avec ce réglage.

10. Procédé selon l'une des revendications précédentes, **caractérisé en ce que** les étapes (b) et (c) de la revendication 1 permettant de vérifier et/ou d'ajuster la caméra (100) à vérifier et/ou à ajuster sont réalisées par le fabricant ou par l'utilisateur.

11. Dispositif d'inspection optique destiné à vérifier et/ou à détecter des structures optiques, en particulier des codes optiques,
(a) avec une caméra (100) et une unité d'évaluation et de commande (202) à laquelle sont amenés le signal d'image généré par la caméra (100) ou des données d'image numériques générées par cette dernière,
**caractérisé en ce**
(b) **que** l'unité d'évaluation et de commande (202) est conçue de manière à pouvoir être commutée dans un mode de test,
(i) dans lequel l'unité d'évaluation et de commande (202) commande la caméra (100) de telle manière qu'au moins une image d'un étalon de test optique (108), qui a une pluralité de zones partielles et dont chacune des représentations de gris est différente, est enregistrée avec un réglage prédéterminé de la caméra (100) qui comprend au moins un paramètre,
(ii) dans lequel l'unité d'évaluation et de commande (202) détermine des valeurs de gris réelles pour les zones partielles de l'au moins une image à partir du signal d'image qui lui est fourni ou des données d'image numériques de l'au moins une image, et
(iii) dans lequel l'unité d'évaluation et de commande (202) compare les valeurs de gris réelles avec des valeurs de gris de référence stockées ou qui lui sont fournies ou avec des plages de valeurs stockées ou qui lui sont fournies pour des valeurs de gris réelles admissibles afin de déclarer que l'ajustage de la caméra (100) est suffisant ou insuffisant,
(iv) ces données étant appliquées à un support de l'étalon de test (109) sous une forme optiquement lisible et/ou étant stockées dans une mémoire prévue dans le support ou sur ce dernier.

12. Dispositif d'inspection optique selon la revendication 11, **caractérisé en ce que** l'unité d'évaluation et de commande (202) est conçue de telle sorte qu'elle exécute automatiquement les procédés selon les revendications 2 à 4 en mode de test ou que ces procédés peuvent être exécutés au moins partiellement manuellement par intervention d'un opérateur.

13. Dispositif d'inspection optique selon la revendication 11 ou 12, **caractérisé en ce qu'**un dispositif de maintien (102) pouvant être relié au dispositif d'inspection (200) pour exécuter le procédé de vérification et/ou d'ajustage avec le dispositif d'inspection (200), de préférence enfiché, ou connecté en permanence à celui-ci, est prévu pour l'étalon de test optique (108), et **en ce que** le dispositif de maintien (102) est conçu de telle sorte que l'étalon de test optique (108) est maintenu à une distance définie de la caméra (100).

14. Dispositif d'inspection optique selon la revendication 13, **caractérisé en ce que** le dispositif de maintien (102) est conçu de telle sorte que l'étalon de test optique (108), qui est de préférence en forme de plaque ou de carte, est maintenu dans une position définie dans un plan essentiellement perpendiculaire à l'axe optique de la caméra (100), l'étalon de test optique (108) pouvant de préférence être inséré dans le dispositif de maintien (102) et en être retiré.

15. Procédé de fabrication d'un étalon de test optique permettant de vérifier et/ou d'ajuster une caméra, en particulier une caméra numérique, **caractérisé par** les étapes suivantes :
(a) la création d'un support pour l'étalon de test optique (108) conçu de sorte que plusieurs zones partielles, dont chacune des représentations de gris est différente, sont prévues sur une surface du support ou au moins partiellement intégrées dans le support, ou l'utilisation d'un tel support pour les étapes ultérieures ;
(b) l'enregistrement d'au moins une image de référence du support au moyen d'une caméra de référence (302), l'enregistrement de l'au moins une image de référence étant effectué avec un réglage prédéterminé de la caméra de référence (302) qui comprend au moins un paramètre ; et
(c) la détermination de valeurs de gris de référence pour les zones partielles à partir de l'image de référence et l'attribution des valeurs de gris de référence au support en appliquant les données au support sous une forme optiquement lisible et/ou le stockage des valeurs de gris de référence dans une mémoire prévue dans le support ou sur ce dernier.

16. Procédé selon la revendication 15, **caractérisé en ce que** le support est associé à d'autres informations et/ou données, en particulier une date de fabrication, une date de fin définissant la validité de l'étalon de test optique (108), une période d'utilisation, un numéro de série de l'étalon de test optique, un numéro de série et/ou des informations de type de la caméra (100) à vérifier et/ou à ajuster et/ou un numéro de série et/ou des informations de type de la caméra de référence (300).

17. Procédé selon l'une des revendications 15 ou 16, **caractérisé en ce que** la caméra de référence (302) est réglée à l'aide d'un étalon optique d'origine (300) sur lequel sont prévues plusieurs structures optiques ayant chacune un niveau de qualité d'image associé, les structures optiques étant par exemple des codes optiques, en particulier des codes-barres ou des codes matriciels, et le réglage de la caméra de référence (302) étant déterminé de sorte que le bon niveau de qualité soit attribué aux structures optiques à partir d'une image de l'étalon optique d'origine (300) enregistrée avec ce réglage.
